# EUROPEAN PATENT APPLICATION

(11) **EP 4 832 617 A1**
(43) Date of publication of application: **28.10.2026**
(21) Application number: 24928944.8
(22) Date of filing: 15.03.2024
(51) Int. Cl.: H04W 72/0453

(54) **COMMUNICATION METHOD, APPARATUS AND DEVICE, MEDIUM, AND PROGRAM PRODUCT**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Penza, Giancarlo
(86) International application number: PCT/CN2024/082023
(87) International publication number: WO 2025/189473

(57) **Abstract**

The present application relates to the field of wireless communications, and discloses a communication method, apparatus and device, a medium, and a program product. The method is executed by a first device, and comprises: sending a PPDU, wherein the PPDU comprises a first part, and the first part is used for supplying energy to a second device and/or providing a carrier for the second device. A feasible solution is provided for the second device to collect environmental energy and/or backscatter signals in a WLAN/WiFi system.

## Description

### TECHNICAL FIELD

The present disclosure relates to the field of wireless communication, and in particular to a method for communication, an apparatus, a device, a medium, and a program product.

### BACKGROUND

Some devices support harvesting ambient energy for communication, while other devices support backscattering communication modes. If these devices are deployed in a wireless communication system such as a WLAN/Wi-Fi system, there is no feasible solution for how to supply energy and/or provide carriers for these devices.

### SUMMARY

The present disclosure provides a method for communication, an apparatus, a device, a medium and a program product. The technical solution at least includes aspects as follows.

According to an aspect of an embodiment of the present disclosure, there is provided a method for communication applied to a first device, the method includes operations as follows.

A physical layer protocol data unit (PPDU) is sent, the PPDU including a first portion for supplying energy and/or providing a carrier for a second device.

According to another aspect of an embodiment of the present disclosure, there is provided a method for communication applied to a second device, the method includes operations as follows.

A PPDU is received, the PPDU including a first portion for supplying energy and/or providing a carrier for a second device.

According to an aspect of an embodiment of the present disclosure, there is provided an apparatus for communication, the apparatus includes a sending module.

The sending module is configured to send a PPDU, the PPDU including a first portion for supplying energy and/or providing a carrier for a second device.

According to another aspect of an embodiment of the present disclosure, there is provided an apparatus for communication, the apparatus includes a receiving module.

The receiving module is configured to receive a PPDU, the PPDU including a first portion for supplying energy and/or providing a carrier for the apparatus.

According to an aspect of an embodiment of the present disclosure, there is provided a communication device including: a processor, a transceiver coupled to the processor, and a memory for storing executable instructions of the processor, where the processor is configured to load and execute the executable instructions to implement the method for communication as described in each of the above aspects.

According to another aspect of an embodiment of the present disclosure, there is provided a communication device including: a receiver, where the communication device is configured to implement the method for communication as described in each of the above aspects.

According to an aspect of an embodiment of the present disclosure, there is provided a computer-readable storage medium having stored thereon at least one program that, when loaded and executed by a processor, implements the method for communication as described in each of the above aspects.

According to an aspect of an embodiment of the present disclosure, there is provided a computer program product or a computer program including computer instructions stored in a computer-readable storage medium from which a processor retrieves the computer instructions and executes the computer instructions to implement the method for communication as described in each of the above aspects.

According to an aspect of an embodiment of the present disclosure, there is provided a chip including a programmable logic circuit and/or at least one program, where the chip is configured to, based on the programmable logic circuit and/or the at least one program, implement the method for communication as described in each of the above aspects.

The technical solutions provided by the embodiments of the present disclosure may include the following beneficial effects.

By using the PPDU to carry the first portion to supply energy and/or provide a carrier for the second device, the second device is supported to operate flexibly and efficiently in the WLAN/Wi-Fi system, providing a feasible solution for the second device to harvest ambient energy and/or backscatter signals in the WLAN/Wi-Fi system.

### BRIEF DESCRIPTION OF THE DRAWINGS

In order to illustrate the technical solutions in the embodiments of the disclosure more clearly, the following will briefly introduce the drawings used in the description of the embodiments. Apparently, the drawings in the following description are only some embodiments of the disclosure. For the skilled person in the art, other drawings may be obtained from these drawings without creative work.
FIG. 1 illustrates a schematic diagram of a wireless communication system according to an exemplary embodiment of the present disclosure.
FIG. 2 illustrates a schematic diagram of a format of a PPDU according to an exemplary embodiment of the present disclosure.
FIG. 3 illustrates a schematic diagram of a format of a medium access control (MAC) frame according to an exemplary embodiment of the present disclosure.
FIG. 4 illustrates a schematic diagram of a wireless communication system according to an exemplary embodiment of the present disclosure.
FIG. 5 illustrates a schematic flowchart of a method for communication according to an exemplary embodiment of the present disclosure.
FIG. 6 illustrates a schematic flowchart of a method for communication according to an exemplary embodiment of the present disclosure.
FIG. 7 illustrates a schematic diagram of a format of a PPDU according to an exemplary embodiment of the present disclosure.
FIG. 8 illustrates a schematic diagram of a format of a PPDU according to an exemplary embodiment of the present disclosure.
FIG. 9 illustrates a schematic diagram of a format of a PPDU according to an exemplary embodiment of the present disclosure.
FIG. 10 illustrates a schematic flowchart of a method for communication according to an exemplary embodiment of the present disclosure.
FIG. 11 illustrates a schematic diagram of a format of a PPDU according to an exemplary embodiment of the present disclosure.
FIG. 12 illustrates a schematic diagram of a format of a MAC header according to an exemplary embodiment of the present disclosure.
FIG. 13 illustrates a schematic diagram of a format of a PPDU according to an exemplary embodiment of the present disclosure.
FIG. 14 illustrates a schematic diagram of a format of a PPDU according to an exemplary embodiment of the present disclosure.
FIG. 15 illustrates a schematic diagram of a format of a Signal field according to an exemplary embodiment of the present disclosure.
FIG. 16 illustrates a schematic diagram of a format of a PPDU according to an exemplary embodiment of the present disclosure.
FIG. 17 illustrates a schematic diagram of a format of a PPDU according to an exemplary embodiment of the present disclosure.
FIG. 18 illustrates a schematic diagram of a format of a PPDU according to an exemplary embodiment of the present disclosure.
FIG. 19 illustrates a schematic diagram of a format of a PPDU according to an exemplary embodiment of the present disclosure.
FIG. 20 illustrates a schematic diagram of a format of a PPDU according to an exemplary embodiment of the present disclosure.
FIG. 21 illustrates a schematic diagram of a format of a PPDU according to an exemplary embodiment of the present disclosure.
FIG. 22 illustrates a schematic diagram of a format of a PPDU according to an exemplary embodiment of the present disclosure.
FIG. 23 illustrates a schematic diagram of a format of a PPDU according to an exemplary embodiment of the present disclosure.
FIG. 24 illustrates a schematic diagram of a format of a PPDU according to an exemplary embodiment of the present disclosure.
FIG. 25 illustrates a schematic diagram of a format of a PPDU according to an exemplary embodiment of the present disclosure.
FIG. 26 illustrates a structural block diagram of an apparatus for communication according to an exemplary embodiment of the present disclosure.
FIG. 27 illustrates a structural block diagram of an apparatus for communication according to an exemplary embodiment of the present disclosure.
FIG. 28 illustrates a schematic structural diagram of a communication device according to an exemplary embodiment of the present disclosure.
FIG. 29 illustrates a schematic structural diagram of a communication device according to an exemplary embodiment of the present disclosure.

### DETAILED DESCRIPTION

In order to make the objectives, technical solutions and advantages of the disclosure more clearly, the embodiments of the disclosure will be described in further detail below in conjunction with the drawings. Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terminology used herein is for the purpose of describing particular embodiments only and is not intended to limit the present disclosure. As used in the present disclosure and the appended claims, the singular forms of "an", "the", and "said" are also intended to include the plurality forms unless the context clearly indicates otherwise. It should also be understood that the term "and/or" as used herein refers to and encompasses any or all possible combinations of one or more associated listed items.

It is to be understood that although the terms first, second, third, and the like may be used in the present disclosure to describe various information, such information should not be limited to such terms. These terms are used only to distinguish information of the same type from each other. For example, the first information may also be referred to as the second information without departing from the scope of the present disclosure, and similarly, the second information may also be referred to as the first information. Depending on the context, the word "if" as used herein may be interpreted as "upon" or "when" or "in response to determining". In the present specification, when expressing the meaning conveyed by a Boolean Value, it may be stated that "0" represents "first meaning" and "1" represents "second meaning", and it can be understood by those skilled in the art that the representative meanings thereof can be interchanged without loss of generality, that is, "1" represents "first meaning" and "0" represents "second meaning".

The technical solutions described in some embodiments of the present disclosure can be applied to various communication systems, such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced Long Term Evolution (LTE-A) system, a New Radio (NR) system, evolution systems of NR, an LTE-based access to unlicensed spectrum (LTE-U) system, an NR-based access to unlicensed spectrum (NR-U) system, a Terrestrial Network (TN) system, a Non-Terrestrial Network (NTN) system, a Universal Mobile Telecommunication System (UMTS), a Worldwide Interoperability for Microwave Access (WiMAX) communication system, Wireless Local Area Networks (WLAN), Wireless Fidelity (Wi-Fi), a 5th-Generation (5G) system, a cellular Internet of Things system, a cellular passive Internet of Things system, subsequent evolution systems of the NR system, a Beyond 5th-Generation (B5G) system, 6G and subsequent evolution systems.

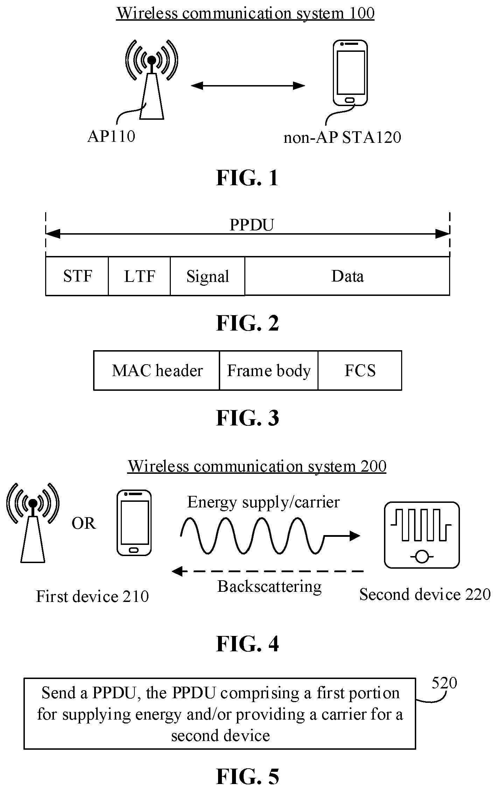

FIG. 1 illustrates a schematic diagram of a wireless communication system 100 according to an exemplary embodiment of the present disclosure. The wireless communication system 100 includes a terminal device and another terminal device, a terminal device and a network device, or an Access Point (AP) and a Station (STA), and the present disclosure is not limited thereto.

In some embodiments, an AP may also be referred to as an AP STA, i.e., an AP is also a kind of STA in a sense. The STAs may include AP STAs and/or non-access point stations (non-AP STAs). The communication between the AP and the STA may be realized as communication between the AP and the non-AP STA, communication between the non-AP STA and the non-AP STA, or communication between the STA and the peer STA. Here, the peer STA refers to a device that communicates with the STA at the opposite end, and the peer STA may be an AP or a non-AP STA. FIG. 1 illustrates a wireless communication system 100 including an AP 110 and a non-AP STA 120 as an example.

In some embodiments, the AP 110 is a device deployed in a WLAN/Wi-Fi system that provides wireless communication functions for STAs. The AP 110 acts as a bridge connecting a wired network and a wireless network, and its main function is to connect various wireless network clients together, and then access the wireless network to the Ethernet. The AP 110 may be a terminal device with a WLAN/Wi-Fi chip, such as a mobile phone, or a network device, such as a router.

In some embodiments, the AP 110 may be a device that supports various current and future Institute of Electrical and Electronics Engineers (IEEE) 802.11 family WLAN formats such as 802.11be, 802.11ax, 802.11ac, 802.11n, 802.11g, 802.11b, 802.11a, etc. The AP 110 may also be applied in a network environment that supports next-generation WLAN systems/next-generation Wi-Fi communications.

In the embodiment of the present disclosure, the next-generation WLAN system is a WLAN system evolved from the 802.11ax system and can meet backward compatibility with the 802.11ax system. The next-generation Wi-Fi communication is any new-generation Wi-Fi communication after Wi-Fi 7 based on the IEEE 802.11be specification, such as Ultra High Reliability (UHR) communication and the like.

In some embodiments, the non-AP STA 120 may be a User Equipment (UE), a mobile phone, a tablet, an e-book reader, a laptop computer, a desktop computer, a television, a Virtual Reality (VR) device, an Augmented Reality (AR) device, a Mediated Reality (MR) device, an Extended Reality (XR) device, a Baffle Reality (BR) device, a Cinematic Reality (CR) device, a Deceive Reality (DR) device, a remote terminal, a wireless device in Industrial Control, a set-top box, a wireless device in Self Driving, an in-vehicle communication device, a wearable device, a wireless device in Remote Medical, a wireless device in Smart Grid, a wireless device in Transportation Safety, a wireless device in Smart City, or a wireless device in Smart Home (such as a smart camera, a smart remote controller, a smart water meter and electricity meter, etc.), a wireless communication chip, an Application Specific Integrated Circuit (ASIC), a System on Chip (SoC), an Internet of Things (IoT) node, a sensor, or a wireless device in Internet of Vehicles (IoV) that supports WLAN/Wi-Fi technology. The non-AP STA 120 may also be a handheld device or computing device with wireless communication functions, or other processing devices connected to a wireless modem, and the like, which are not enumerated here.

It is understood that the role of the STA in wireless communication is not absolute. For example, when the mobile phone A is connected to a router, the mobile phone A is a non-AP STA, and when the mobile phone A is a hotspot of the mobile phone B, the mobile phone A acts as an AP.

In some embodiments, the non-AP STA 120 may be a device that supports various current and future WLAN formats of the IEEE 802.11 family, such as 802.11be, 802.11ax, 802.11ac, 802.11n, 802.11g, 802.11b, 802.11a, and the like. The non-AP STA 120 may also be applied in a network environment that supports next-generation WLAN systems/next-generation Wi-Fi communications.

In some embodiments, both the AP 110 and the non-AP STA 120 support, but are not limited to, the IEEE 802.11 protocol.

In some embodiments, the frequency bands that the wireless communication system 100 can support include, but are not limited to, a millimeter wave (mmWave) frequency band (such as a frequency band belonging to the range of 30 to 300 GHz, such as 45 GHz, 60 GHz, etc.), and a low frequency band. Here, the low frequency band includes a sub-7 GHz band (for example, a frequency band belonging to the range of 1 to 7.25 GHz, such as 2.4 GHz, 5 GHz, 6 GHz, etc.).

In some embodiments, there is one or more links between the AP 110 and the non-AP STA 120.

In some embodiments, multi-band communication is supported between the AP 110 and the non-AP STA 120. For example, communicating simultaneously on at least one of the 2.4 GHz, 5 GHz, 6 GHz, 45 GHz, or 60 GHz, etc. Another example is to communicate simultaneously on different channels of the same frequency band or different channels of different frequency bands. Multi-band communication may improve communication throughput and/or reliability between devices. Such a device that supports multi-band communication can be considered to have Multi-Link Operation (MLO) capability, and is commonly referred to as a multi-band device or a Multi-Link Device (MLD), sometimes also referred to as a multi-band entity or a multi-link entity. The MLD may be an AP device or a non-AP STA device. If the MLD is an AP device, one or more APs are included in the MLD. If the MLD is a non-AP STA device, one or more non-AP STAs are included in the MLD. A plurality of links may be formed between the AP in the AP MLD and the STA in the STA MLD, and communication may be performed between the AP in the AP MLD and the STA in the STA MLD via corresponding links.

### • Regarding unlicensed spectrum

Unlicensed spectrum is the spectrum divided by countries and regions that can be used for radio equipment communication. This spectrum is generally considered as shared spectrum, that is, communication devices in different communication systems can use this spectrum as long as they meet the regulatory requirements set by countries or regions on this spectrum, and there is no need to apply for proprietary spectrum authorization from the government. In order to allow the various communication systems that use unlicensed spectrum for wireless communication to coexist amicably on the spectrum, some countries or regions have set regulatory requirements that must be met for the use of unlicensed spectrum. For example, in Europe, the communication device follows the Listen-before-Talk (LBT) principle, that is, the communication device needs to perform channel sensing before sending a signal on a channel of an unlicensed spectrum, and the communication device can send a signal only when the channel sensing result is that the channel is idle. If the channel sensing result of the communication device on the channel of the unlicensed spectrum is that the channel is busy, the communication device cannot send signals. In order to ensure fairness, in one transmission, the signal transmission duration of the communication device using the channel of the unlicensed spectrum cannot exceed the Maximum Channel Occupation Time (MCOT). The widely used Wi-Fi technology is a communication technology that uses the unlicensed frequency bands.

### • Regarding channel access mechanisms

In the IEEE 802.11 protocol, the basic channel access protocol is the Distributed Coordination Function (DCF), which uses the Carrier Sense Multiple Access with Collision Avoidance (CSMA/CA) mechanism to enable different compatible STA devices to share the using channel and reduce the probability of collisions. DCF mainly includes the following four core mechanisms.
1. Carrier sensing mechanism: the carrier sensing mechanism is divided into physical carrier sensing and virtual carrier sensing. If the result of any sensing indicates that the channel is busy, then the channel is considered busy. Physical carrier sensing adopts three channel idle detection modes: energy detection, carrier detection and energy carrier hybrid detection, collectively referred to as Clear Channel Assessment (CCA). The energy detection determines the energy magnitude of the received signal, and when the received power is greater than the threshold ED_threshold specified by the physical layer, the channel is considered to be occupied. The carrier detection detects the preamble portion of the signal in the channel, and determines whether the channel is occupied according to the detection result.
   The virtual carrier sensing mechanism is provided by MAC, and the 802.11 protocol uses the Network Allocation Vector (NAV) to realize virtual sensing. "Duration" is stored in the Dur/ID field of the MAC frame. The STA that receives the information determines the time for which the channel will be occupied, and determines the time by which its own transmission needs to be delayed. NAV is a Timer, which is used to define how long the current channel needs to be occupied. The starting value is the duration of the last received frame, and the countdown ends at 0. Each sensing STA uses the NAV timer. During data communication, the STA occupying the channel informs other STAs how long it will use the channel via the Duration field in the frame, while the STA that has not acquired the channel updates the value of its own NAV by comparing the Duration value in the received packet. When the NAV value is 0 and the physical carrier sensing indicates that the channel is idle, the current channel is considered to be idle.
2. Interframe Space (IFS) mechanism: in order to avoid collision as much as possible, the 802.11 protocol stipulates that all stations must wait for a short period of time (continue to sense) before they can send the next frame after completing the transmission. The generic name for this period of time is IFS. The length of the IFS depends on the type of frame to be sent by the station. High-priority frames need to wait for a shorter time, so they can get the sending right first, but low-priority frames have to wait for a longer time. If the low-priority frame has not yet been sent and other high-priority frames have been sent to the media, the media becomes busy and the low-priority frame can only be delayed. This reduces the chance of a collision.

The IFS provides different priorities for accessing the wireless medium, and the different priorities are divided according to the length of the IFS. The shorter the time, the higher the corresponding priority, and the time of the interframe space is arranged from small to large as: Short IFS (SIFS), Point Coordination Function IFS (PIFS), DCF IFS (DIFS), and Extended IFS (EIFS).

Here, SIFS is the shortest time period for spacing frames that require immediate response, such as control frames, for example, Request To Send (RTS) frames, Clear To Send (CTS) frames, and Acknowledgment (ACK) frames. Using the shortest space between two transmissions of the frame exchange sequence may prevent other stations that are waiting for the media from attempting to use the media.

PIFS: can only be used by STAs operating in PCF mode. DIFS: can only be used by STAs operating in DCF mode.

EIFS: in the case of an error in the previous frame, the sending node has to delay the EIFS instead of the DIFS before sending the next frame.

3. Random backoff mechanism: in 802.11, the binary exponential backoff method is adopted to solve the backoff time when the node fails to send or a collision occurs. When a frame needs to be sent in the MAC layer, after both physical carrier sensing and virtual carrier sensing indicate that the channel is idle, if the count value of the backoff window is not 0, the count value will continue to be reduced in the unit of slot time, otherwise a backoff window will be randomly generated for backoff. The node selects a random backoff count value based on a random number in the contention window. After the backoff time is selected, it is equivalent to setting a Backoff Timer. The value of the contention window is a parameter value between the physical feature values CWmin (Minimum Contention Window) and CWmax (Maximum Contention Window), which is used to let the node select the range of the Backoff Counter (random fallback count value). The station continuously senses the channel during the slot time. If it is detected that the channel is idle, the backoff timer continues to count down by one. If it is detected that the channel is busy, the remaining time of the backoff timer is frozen, and the countdown is continued from the remaining time after waiting for the channel to become idle again and the time DIFS elapses. When the time of the backoff timer is reduced to zero, the entire data frame is sent.

4. RTS/CTS handshake mechanism: RTS/CTS is a mechanism adopted by 802.11 protocol to reduce collisions caused by hidden node problems. The basic idea of RTS/CTS mechanism is to reserve channels through short control packets. If the sending station wants to send messages to the receiving station, it must first send an RTS control frame. After receiving this RTS, the stations around the sending station set their own NAV values according to the Duration field. After receiving the RTS, the receiving station replies with a CTS control frame. After receiving the CTS, the stations around the receiving station set their own NAV values according to the Duration field. A station whose NAV value is not 0 cannot perform idle channel monitoring, thus avoiding collisions with the transmission between the sending station and the receiving station.

### • Regarding Physical Layer Protocol Data Unit (PPDU)

The information of the Wi-Fi device is transported on the basis of PPDU frames. The PPDU frame includes a physical layer header and a data portion, for example, there are three portions in front of the physical layer header of 802.11a/g, an Short Training Frame (STF), an Long Training Frame (LTF), and a Signal, as shown in FIG. 2.

Here, the STF is mainly composed of 10 short symbols, which can be called t1 to t10, and each symbol is 0.8 µs. STF has many functions, mainly used to realize frame synchronization and coarse frequency synchronization. Here, t1 to t7 mainly include Signal Detect, Automatic Gain Control (AGC), and the Diversity Selection function, while t8 to t10 mainly include Coarse Freq correction, Offset Estimation, and Timing Synchronize functions. LTF is used to achieve fine frequency synchronization and channel estimation. The SIGNAL portion carries relevant information of the data portion, including, for example, the data transmission rate, the Length of the data packet, the reserved bit, and the tail bit. The data portion of the PPDU carries a Medium Access Control (MAC) frame, and the frame format of the MAC frame includes the following portions: a MAC header, a Frame Body, and a Frame Check Sequence (FCS), as shown in FIG. 3.

### • Regarding the zero-power device

With the development of communication technology and the expansion of communication demand, the demand for low power consumption of the communication device is becoming increasingly urgent. Therefore, a zero-power communication technology is introduced to realize the reduction of terminal-side power consumption, and the zero-power communication technology may be referred to as at least one of: an ultra low power communication technology, a low power communication technology, or the like. A communication device for implementing a zero-power communication technology may be referred to as a zero-power device, and the zero-power device may also be referred to as at least one of: an ultra low power device, a low power device, or the like.

Specifically, zero-power devices can be divided into the following three types from the perspective of energy sources and usage modes.
(1) The passive devices: the passive devices do not require built-in batteries. When the passive device is close to the network device, the passive device is in the near field range formed by the radiation of the antenna of the network device. Therefore, the antenna of the passive device generates an induced current through electromagnetic induction, and the induced current drives the low power chip circuit of the passive device. Demodulation of the forward link signal and modulation of the backward link signal are realized. For backscattering links, the passive device may transport signals using backscattering or extremely low power active transmission modes. Passive devices do not need built-in batteries to drive either the forward link or the backward link. Therefore, passive devices can be considered a true zero-power device.

In addition to requiring no battery, the radio frequency circuit and baseband circuit of the passive device are very simple, e.g., they do not need components such as a Low-Noise Amplifier (LNA), a Power Amplifier (PA), a crystal oscillator, an Analog to Digital Converter (ADC) and other devices, which makes passive device have many advantages such as small size, light weight, very low cost and long service life.

Passive devices can also support other energy harvesting modes, by harvesting energy in the environment (such as light energy, heat energy, kinetic energy, mechanical energy, etc.), and obtaining energy from the drive circuit to realize communication.

(2) The semi-passive devices: the semi-passive devices themselves do not install conventional batteries. The radio wave energy is harvested by the radio frequency energy harvesting module or energy in the environment (e.g., light energy, heat energy, kinetic energy, mechanical energy, etc.) is harvested by the energy harvesting module, and the harvested energy is stored in an energy storage unit (e.g., capacitor). After the energy storage unit obtains energy, it can drive the low power chip circuit of the semi-passive device. Demodulation of the forward link signal and modulation of the backward link signal are realized. For backscattering links, the semi-passive device may transport signals using backscattering or low power active transmission modes.

Semi-passive devices do not need built-in batteries to drive either the forward link or the backward link. Although the energy stored by capacitors is used in operation, the energy source comes from radio frequency energy. Therefore, semi-passive devices can be considered as a real zero-power device. Semi-passive devices inherit many advantages of passive devices, such as small size, light weight, very low cost, long service life, etc.

(3) The active devices: the active devices can have built-in batteries. Batteries are used to drive low power chip circuits of active devices. Demodulation of the forward link signal and modulation of the backward link signal are realized. The signal transmission of the backward link of the active device may realize the backward link transmission by backscattering mode without consuming the power of the active device itself. Alternatively, the active device implements backward link transmission by low power active transmission mode. Although they have built-in batteries, such active devices have extremely low power consumption and complexity, so the capacity of the battery can be set in a small range, thus achieving a smaller cost and size. The built-in battery of the active device can also be used as an energy storage unit to store the ambient energy harvested by the energy harvesting module, thus extending the maintenance period of the active device, even making it maintenance-free.

In active devices, built-in battery power supply is used to increase the communication distance of active devices and improve the reliability of communication. Therefore, active devices can be applied in some scenarios with relatively high requirements for communication distance and reading delay.

Specifically, from the viewpoint of the transmitter type, the zero-power device can be divided into the following three types.
(1) A device including a backscattering module that performs uplink transmission using the backscattering mode described above. Such devices do not have active transmitters for active transmission, but only transmitters for the backscattering module. Therefore, when performing uplink transmission, a network device is required to provide a carrier (Carrier/Carrier Wave/Carrier Signal), and such a device performs backscattering based on the carrier to realize uplink transmission.
(2) Device with an active transmitter uses the active transmitter with active transmitting capability for uplink transmission. Therefore, when such device performs uplink transmission, it can send uplink data by using its own active transmitter without requiring network device to provide carrier. An active transmitter suitable for such a device may be, for example, a low power Amplitude Shift Keying (ASK) transmitter, a low power Frequency Shift Keying (FSK) transmitter, or the like. Based on the current implementation, the overall power consumption of the device can be reduced to 400~600 microwatt (µW) when such a transmitter sends a signal of 100 µW.
(3) Device with both the backscattering module and the active transmitter, which supports both backscattering and active transmission. Such devices can determine whether to use the backscattering mode or the active transmitter for active transmission according to different situations (such as different amounts of electricity, different available ambient energy sources), or based on scheduling of the network device.

### • Regarding cellular passive IoT

With the increase of applications in the communication industry, there are more and more types and application scenarios of connectors, and there will be higher requirements for the price and power consumption of communication device. The application of battery-free and low-cost Passive Internet of Things (Passive IoT) devices has become the key technology of cellular IoT, enriching the types and number of wireless network link terminals, and truly realizing the Internet of Everything. Passive IoT devices can be based on zero-power technologies, such as Radio Frequency Identification (RFID) technology, and extended therefrom to adapt to cellular IoT.

In NR systems and Wi-Fi systems, the advantages of being battery-free and low cost can support large-scale, low-cost deployment and maintenance-free operation of IoT devices. At present, IoT devices based on ambient energy are being studied to solve the problem of energy supply. The ambient energy-based IoT devices can be called Ambient IoT/A-IoT/AMP (Ambient Power Enabled IoT) devices, etc. The Energy required for their operation comes from ambient Energy Harvesting, and the ambient energy sources can be radio frequency energy, light energy, solar energy, thermal energy, mechanical energy, etc. Here, a device that harvests radio frequency energy to drive its own operation may require other devices to provide radio frequency energy supply signals for it.

Such A-IoT devices are similar to passive devices or semi-passive devices in zero-power communication. The A-IoT device harvests ambient power and stores it in an energy storage unit. After the energy storage unit obtains enough power, it can drive the low-power circuit to work for signal demodulation of the forward link and signal modulation and transmission of the backward link.

In some scenarios, A-IoT devices can be divided into the following three types, with corresponding complexity and communication capabilities respectively: Device A: does not have energy storage capability. Cannot send independent signals, i.e., it uses the backscattering transmission mode. Device B: has energy storage capability. Cannot send independent signals, i.e., it uses the backscattering transmission mode. The stored energy can be used to amplify the backscattering signal. Device C: has energy storage capability. Can send independent signals, that is, it has active transmission capability.

Here, Device A has the lowest complexity and power consumption. The power consumption can be as low as 1 microwatt, but its communication distance is limited, generally only a few meters. Device A requires network device to provide carrier signals for Backscattering Transmission. Device C generally has a large capacitor to store power from the environment, and its power consumption can support hundreds of microwatts, which can support active signal transmission, and has a large communication distance. Since Device C can perform active transmission, it does not require network device to provide carrier signals for Device C. The complexity and power consumption of Device B is between those of Device A and Device C.

In other scenarios, A-IoT devices can be divided into the following two types.

The first type of A-IoT device: 0~1 µW peak power consumption. This type of A-IoT device has energy storage, an Initial Sampling Frequency Offset of 10X ppm, no uplink and downlink power amplifiers, and performs uplink transmission by backscattering external carriers.

The second type of A-IoT device: the peak power consumption is less than several hundred µW. This type of A-IoT device has energy storage, and the initial sampling deviation is 10X ppm. It may be configured with uplink and/or downlink power amplifiers, and can perform uplink transmission either by generating their own transmission internally (i.e., active transmission) or by backscattering an external carrier.

Generally speaking, compared with other IoT devices, A-IoT devices have many advantages, such as being free of conventional batteries, maintenance-free, small in size, low in complexity and cost, and having a long lifecycle.

As described above, the operation of A-IoT devices relies on ambient energy harvesting. For radio frequency energy harvesting-based A-IoT devices, how to send the radio frequency signal is an issue to be solved. On the other hand, the signal transmission mode of A-IoT device includes active transmission and backscattering. If A-IoT device supports backscattering to send signals, it is necessary to provide a Carrier signal to the A-IoT device externally. How to send the carrier signal is also a problem that needs to be solved.

Therefore, the present disclosure proposes a method for communication, which combines the transmission of PPDU frames to provide carrier signals and/or supply energy for A-IoT devices, supports A-IoT devices to operate flexibly and efficiently in a Wi-Fi system, and expands the application scenarios of A-IoT devices.

FIG. 4 illustrates a schematic diagram of a wireless communication system 200 including a first device 210 and a second device 220 according to an exemplary embodiment of the present disclosure. Based on the actual communication scenario, the wireless communication system 200 may also include other devices, and the present disclosure is not limited thereto.

The first device 210 includes a wireless communication function and includes at least one of: a network device, a terminal device, and a device dedicated to providing an energy supply signal and/or a carrier signal. The second device 220 also includes a wireless communication function.

The network device may include a network device in a WLAN/Wi-Fi system or a network device in a cellular network. Exemplarily, the network device includes at least one of: an AP (the AP 110 shown in FIG. 1 may be referred to), a wireless relay node, a wireless backhaul node, a base station, an Evolved Node B (eNB), an Node B (NB), a Next Generation Node B (gNB), an HNB (for example, a Home Evolved Node B, or a Home Node B), a Transmission and Reception Point (TRP), a Radio Network Controller (RNC), a Base Station Controller (BSC), a Base Transceiver Station (BTS), a Baseband Unit (BBU), a Distributed Unit (DU), one or more antenna panels of a base station, a base station in a Beyond Fifth Generation (B5G) system, or a reader/writer.

The terminal device may include a terminal device in a WLAN/Wi-Fi system or a terminal device in a cellular network. Exemplarily, the terminal device includes at least one of: a non-AP STA (the non-AP STA 120 shown in FIG. 1 may be referred to), a UE, a mobile phone, a computer, a sensor, an in-vehicle device, a wearable device, a handheld device, or the like.

In some embodiments, the energy used by the second device 220 for communication comes from ambient energy harvested by the second device 220. The ambient energy includes, for example, at least one of: radio frequency energy, light energy, solar energy, thermal energy, mechanical energy, kinetic energy, or the like.

In some embodiments, the acquisition of radio frequency energy is based on radio frequency signals in the environment, such as radio frequency signals of other communication systems, broadcast telecommunications, and the like. In this case, the energy harvesting mode of the second device 220 may be considered to be passive.

In some embodiments, the acquisition of radio frequency energy is based on In Band radio frequency signals, such as signals transported using time-frequency resources within the communication system. This helps to guarantee energy harvesting efficiency and reliability.

In some embodiments, the second device 220 supports backscattering and/or active transmission communication modes. If the second device 220 adopts a backscattering communication mode, it requires an external carrier signal to be provided. In the present disclosure, the carrier signal required by the second device 220 is taken as coming from the first device 210 as an example.

In some embodiments, the second device 220 includes at least one of: an A-IOT device, an AMP device, a passive IOT device, a zero-power device, a low power device, an ultra low power device, a device for harvesting radio frequency energy, or a device for harvesting electromagnetic wave energy.

FIG. 5 illustrates a schematic flowchart of a method for communication provided by an exemplary embodiment of the present disclosure. The method is executed by a first device, and the method includes at least some of the following operations.

**At operation 520:** a PPDU is sent, the PPDU including a first portion for supplying energy and/or providing a carrier for a second device.

The PPDU includes a first portion, which may also be understood as the PPDU carrying the first portion, or as the first portion being transported as a portion of the PPDU.

In some embodiments, the first portion is used to supply energy to the second device. Optionally, the first portion may also be referred to as at least one of: an energy supply portion, an energy portion, an energy supply field, an energy field, an energy supply signal, or an energy signal. In the embodiment of the present disclosure, supplying energy can be understood as Energy Supply, Charging, or Power.

Alternatively, when the first portion is understood to be a field for supplying energy, the first portion may be referred to as an Energy Supply Field, or a Charging Field, or a Power Field, an Energy Field, or the like. Optionally, the PPDU including the first portion may be referred to as at least one of: an Energy Supply PPDU, a Charging PPDU, a Power PPDU, an Energy PPDU, a PPDU carrying an Energy Supply Field, a PPDU carrying a Charging Field, a PPDU carrying a Power Field, or a PPDU carrying an Energy Field.

Alternatively, when the first portion is understood to be a frame for supplying energy, the first portion may be referred to as an Energy Supply Frame, or a Charging Frame, or a Power Frame, an Energy Frame, or the like. Optionally, the PPDU including the first portion may be referred to as at least one of: an Energy Supply PPDU, a Charging PPDU, a Power PPDU, an Energy PPDU, a PPDU carrying an Energy Supply Frame, a PPDU carrying a Charging Frame, a PPDU carrying a Power Frame, or a PPDU carrying an Energy Frame.

Alternatively, when the first portion is understood to be a PPDU for supplying energy, the first portion may be referred to as an Energy Supply PPDU, or a Charging PPDU, or a Power PPDU, an Energy PPDU, or the like. Optionally, the PPDU including the first portion may be referred to as at least one of: an Energy Supply PPDU, a Charging PPDU, a Power PPDU, an Energy PPDU, a PPDU including an Energy Supply PPDU, a PPDU including a Charging PPDU, a PPDU including a Power PPDU, or a PPDU including an Energy PPDU.

In some embodiments, the first portion is used to supply energy to the second device, it may be understood that the wireless signal carrying the first portion is used to supply energy to the second device. The wireless signal carrying the first portion is a portion of the wireless signal carrying the PPDU.

In some embodiments, the first portion is used to provide a carrier for the second device. Optionally, the first portion may also be referred to as at least one of: a carrier portion, a carrier field, or a carrier signal. In the embodiment of the present disclosure, a carrier may be referred to as a Carrier, a Carrier Wave, or a Carrier Signal.

Alternatively, when the first portion is understood as a field for providing a carrier, the first portion may be referred to as a Carrier Field, may also be referred to as a Carrier Wave Field, or a Carrier Signal Field, or the like. Optionally, the PPDU including the first portion may be referred to as at least one of: a Carrier PPDU, a Carrier Wave PPDU, a Carrier Signal PPDU, a PPDU carrying a Carrier Field, a PPDU carrying a Carrier Wave Field, or a PPDU carrying a Carrier Signal Field.

Alternatively, when the first portion is understood as a frame for providing a carrier, the first portion may be referred to as a Carrier Frame, may also be referred to as a Carrier Wave Frame, or a Carrier Signal Frame, or the like. Optionally, the PPDU including the first portion may be referred to as at least one of: a Carrier PPDU, a Carrier Wave PPDU, a Carrier Signal PPDU, a PPDU carrying a Carrier Frame, a PPDU carrying a Carrier Wave Frame, or a PPDU carrying a Carrier Signal Frame.

Alternatively, when the first portion is understood as a PPDU for providing a carrier, the first portion may be referred to as a Carrier PPDU, may also be referred to as a Carrier Wave PPDU, or a Carrier Signal PPDU, or the like. Optionally, the PPDU including the first portion may be referred to as at least one of: a Carrier PPDU, a Carrier Wave PPDU, a Carrier Signal PPDU, a PPDU including a Carrier PPDU, a PPDU including a Carrier Wave PPDU, or a PPDU including a Carrier Signal PPDU.

In some embodiments, the first portion is used to provide a carrier for the second device, and it can be understood that the wireless signal carrying the first portion is a carrier signal of the second device, that is, the second device backscatters the wireless signal carrying the first portion when backscattering. The wireless signal carrying the first portion is a portion of the wireless signal carrying the PPDU.

In some embodiments, the first portion is used to both supply energy to the second device and provide a carrier for the second device.

In some embodiments, the first portion that supplies energy to the second device is the same as the first portion that provides the carrier for the second device.

In some embodiments, where the first portion that supplies energy to the second device is different from the first portion that provides the carrier for the second device, one or more fields in the PPDU may further indicate the type of the first portion, that is, fields other than the first portion in the PPDU are used to indicate whether the first portion is used to supply energy or provide a carrier.

From the perspective of frequency band, PPDU can be sent in the millimeter wave frequency band (such as 45 GHz, 60 GHz and other frequency bands belonging to the range of 30 to 300 GHz) or in the non-millimeter wave frequency band. Non-millimeter wave frequency bands include low frequency bands (such as 2.4 GHz, 5 GHz, 6 GHz and other frequency bands belonging to the range of 1 to 7.25 GHz), or include new frequency bands different from millimeter wave frequency bands that may be planned in the future.

From a waveform perspective, the waveform of the PPDU may be a sine wave, a square wave, a triangular wave, a pulse, a rectangular wave, or the like. The waveform of the PPDU may be continuous or discontinuous, that is, allowing the PPDU to be interrupted within a certain time domain.

From the perspective of coding, the PPDU may use one of the following coding methods: Not Return to Zero (NRZ) coding, Manchester coding, Unipolar Return to Zero (URZ) coding, Differential Binary Phase (DBP) coding, Miller coding, Differential coding.

In some embodiments, the first portion may also generate a relatively constant amplitude signal by multi-carrier modulation for backscattering to perform ASK or On-Off Keying (OOK) modulation.

For the first device according to the embodiment of the present disclosure, reference may be made to the first device 210 shown in FIG. 4, and for the second device according to the embodiment of the present disclosure, reference may be made to the second device 220 shown in FIG. 4, which will not be described again here.

In some embodiments, the number of first devices is one or more, and the number of second devices is one or more.

In summary, in the method provided by the embodiment of the present disclosure, the PPDU, as a basic unit for a wireless device to send a signal at an air interface in a WLAN/Wi-Fi system, carries a first portion of supplying energy and/or providing a carrier for the second device, thereby supporting the second device to operate flexibly and efficiently in the WLAN/Wi-Fi system. Therefore, the embodiment of the present disclosure provides a method for communication particularly suitable for a WLAN/Wi-Fi system, and provides a feasible solution for a second device to harvest ambient energy and/or backscatter signals in the WLAN/Wi-Fi system.

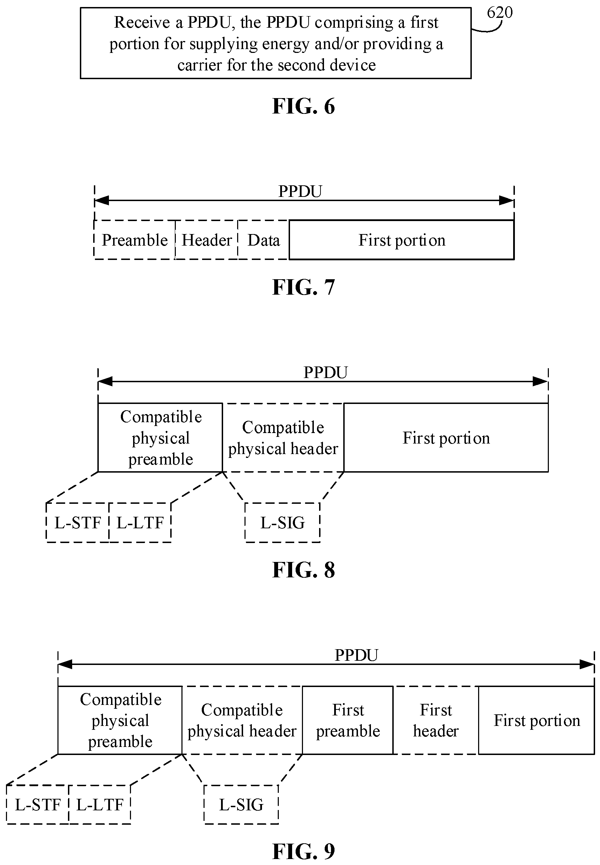

FIG. 6 illustrates a schematic flowchart of a method for communication provided by an exemplary embodiment of the present disclosure. The method is executed by a second device, and the method includes at least some of the following operations.

**At operation 620:** a PPDU is received, the PPDU including a first portion for supplying energy and/or providing a carrier for a second device.

The PPDU includes a first portion, which may also be understood as the PPDU carrying the first portion, or as the first portion being transported as a portion of the PPDU.

In some embodiments, the first portion is used to supply energy to the second device. Optionally, the first portion may also be referred to as at least one of: an energy supply portion, an energy portion, an energy supply field, an energy field, an energy supply signal, or an energy signal. In the embodiment of the present disclosure, supplying energy can be understood as Energy Supply, Charging, or Power.

Alternatively, when the first portion is understood to be a field for supplying energy, the first portion may be referred to as an Energy Supply Field, or a Charging Field, or a Power Field, an Energy Field, or the like. Optionally, the PPDU including the first portion may be referred to as at least one of: an Energy Supply PPDU, a Charging PPDU, a Power PPDU, an Energy PPDU, a PPDU carrying an Energy Supply Field, a PPDU carrying a Charging Field, a PPDU carrying a Power Field, or a PPDU carrying an Energy Field.

Alternatively, when the first portion is understood to be a frame for supplying energy, the first portion may be referred to as an Energy Supply Frame, or a Charging Frame, or a Power Frame, an Energy Frame, or the like. Optionally, the PPDU including the first portion may be referred to as at least one of: an Energy Supply PPDU, a Charging PPDU, a Power PPDU, an Energy PPDU, a PPDU carrying an Energy Supply Frame, a PPDU carrying a Charging Frame, a PPDU carrying a Power Frame, or a PPDU carrying an Energy Frame.

Alternatively, when the first portion is understood to be a PPDU for supplying energy, the first portion may be referred to as an Energy Supply PPDU, or a Charging PPDU, or a Power PPDU, an Energy PPDU, or the like. Optionally, the PPDU including the first portion may be referred to as at least one of: an Energy Supply PPDU, a Charging PPDU, a Power PPDU, an Energy PPDU, a PPDU including an Energy Supply PPDU, a PPDU including a Charging PPDU, a PPDU including a Power PPDU, or a PPDU including an Energy PPDU.

In some embodiments, the first portion is used to supply energy to the second device, it may be understood that the wireless signal carrying the first portion is used to supply energy to the second device. The wireless signal carrying the first portion is a portion of the wireless signal carrying the PPDU.

In some embodiments, the first portion is used to provide a carrier for the second device. Optionally, the first portion may also be referred to as at least one of: a carrier portion, a carrier field, or a carrier signal. In the embodiment of the present disclosure, a carrier may be referred to as a Carrier, a Carrier Wave, or a Carrier Signal.

Alternatively, when the first portion is understood as a field for providing a carrier, the first portion may be referred to as a Carrier Field, may also be referred to as a Carrier Wave Field, or a Carrier Signal Field, or the like. Optionally, the PPDU including the first portion may be referred to as at least one of: a Carrier PPDU, a Carrier Wave PPDU, a Carrier Signal PPDU, a PPDU carrying a Carrier Field, a PPDU carrying a Carrier Wave Field, or a PPDU carrying a Carrier Signal Field.

Alternatively, when the first portion is understood as a frame for providing a carrier, the first portion may be referred to as a Carrier Frame, may also be referred to as a Carrier Wave Frame, or a Carrier Signal Frame, or the like. Optionally, the PPDU including the first portion may be referred to as at least one of: a Carrier PPDU, a Carrier Wave PPDU, a Carrier Signal PPDU, a PPDU carrying a Carrier Frame, a PPDU carrying a Carrier Wave Frame, or a PPDU carrying a Carrier Signal Frame.

Alternatively, when the first portion is understood as a PPDU for providing a carrier, the first portion may be referred to as a Carrier PPDU, may also be referred to as a Carrier Wave PPDU, or a Carrier Signal PPDU, or the like. Optionally, the PPDU including the first portion may be referred to as at least one of: a Carrier PPDU, a Carrier Wave PPDU, a Carrier Signal PPDU, a PPDU including a Carrier PPDU, a PPDU including a Carrier Wave PPDU, or a PPDU including a Carrier Signal PPDU.

In some embodiments, the first portion is used to provide a carrier for the second device, and it can be understood that the wireless signal carrying the first portion is a carrier signal of the second device, that is, the second device backscatters the wireless signal carrying the first portion when backscattering. The wireless signal carrying the first portion is a portion of the wireless signal carrying the PPDU.

In some embodiments, the first portion is used to both supply energy to the second device and provide a carrier for the second device.

In some embodiments, where the first portion that supplies energy to the second device is different from the first portion that provides the carrier for the second device, one or more fields in the PPDU may further indicate the type of the first portion, that is, other fields in addition to the first portion in the PPDU are used to indicate whether the first portion is used to supply energy or provide a carrier.

From the perspective of frequency band, PPDU can be sent in the millimeter wave frequency band (such as 45 GHz, 60 GHz and other frequency bands belonging to the range of 30 to 300 GHz) or in the non-millimeter wave frequency band. Non-millimeter wave frequency bands include low frequency bands (such as 2.4 GHz, 5 GHz, 6 GHz and other frequency bands belonging to the range of 1 to 7.25 GHz), or include new frequency bands different from millimeter wave frequency bands that may be planned in the future.

From a waveform perspective, the waveform of the PPDU may be a sine wave, a square wave, a triangular wave, a pulse, a rectangular wave, or the like. The waveform of the PPDU may be continuous or discontinuous, that is, allowing the PPDU to be interrupted within a certain time domain.

From the perspective of coding, the PPDU may use one of the following coding methods: NRZ coding, Manchester coding, URZ coding, DBP coding, Miller coding, differential coding.

For the first device according to the embodiment of the present disclosure, reference may be made to the first device 210 shown in FIG. 4, and for the second device according to the embodiment of the present disclosure, reference may be made to the second device 220 shown in FIG. 4, which will not be described again here.

In some embodiments, if the first portion is used to supply energy to the second device, the second device harvests energy through the received PPDU.

In some embodiments, if the first portion is used to provide a carrier for the second device, the second device sends the first signal by way of backscattering. Optionally, the receiver of the first signal includes a first device, or includes other devices in addition to the first device and the second device. Optionally, the sending frequency band of the first signal is the same as or different from the sending frequency band of the PPDU.

In some embodiments, the first signal may be considered a backscattering signal of a PPDU or a first portion, and the PPDU or the first portion is a carrier signal of the first signal.

In some embodiments, the first signal may be considered to be an outgoing signal of the backscattering communication, and the PPDU or the first portion is an incident signal of the backscattering communication.

In some embodiments, the number of first devices is one or more, and the number of second devices is one or more.

In summary, in the method provided by the embodiment of the present disclosure, the PPDU, as a basic unit for a wireless device to send a signal at an air interface in a WLAN/Wi-Fi system, carries a first portion of supplying energy and/or providing a carrier for the second device, thereby supporting the second device to operate flexibly and efficiently in the WLAN/Wi-Fi system. Therefore, the embodiment of the present disclosure provides a method for communication particularly suitable for a WLAN/Wi-Fi system, and provides a feasible solution for a second device to harvest ambient energy and/or backscatter signals in the WLAN/Wi-Fi system.

### Regarding the PPDU format:

On the basis of the embodiments shown in FIGS. 5 and 6, the present disclosure further designs the format of PPDU in consideration of the fairness of use of unlicensed spectrum in a WLAN/Wi-Fi system, and the problems of interference, competition, compatibility and the like between different devices.

FIG. 7 illustrates a schematic diagram of a format of a PPDU according to an exemplary embodiment of the present disclosure. The PPDU includes, in addition to the first portion, one or more of: a preamble portion, a header, or a Data portion. The arrangement order of these portions can be adjusted according to the actual situation, for example, the header is before the preamble portion, the data is before the preamble portion, the first portion is before the data portion, the data portion is before the header, and the like, and the portions and the arrangement order thereof shown in FIG. 7 are as an example and not limiting.

Further, if the PPDU format shown in FIG. 7 is combined with the following seven different communication scenarios, a more specific design of the PPDU format can also be made to support the PPDU format provided by the present disclosure to adapt to different communication scenarios.

### 1. From the perspective of physical carrier sensing, the PPDU should include at least a preamble portion.

Because the devices in the WLAN/Wi-Fi system should perform carrier sensing to determine whether the channel is idle before accessing the channel, and the carrier sensing includes two ways: physical carrier sensing and virtual carrier sensing, the present disclosure also designs the format of PPDU according to the requirements of carrier sensing.

Physical carrier sensing includes carrier detection, that is, determining whether a channel is occupied according to the detection result by detecting a preamble portion in a PPDU. Therefore, the PPDU should include a preamble portion to support in-system devices to implement physical carrier sensing.

**Format (1):** FIG. 8 illustrates a schematic diagram of a format of a PPDU according to an exemplary embodiment of the present disclosure. The PPDU includes a preamble portion in addition to the first portion. The preamble portion includes a compatible physical preamble.

In the embodiment of the present disclosure, the compatible physical preamble is a physical preamble capable of forward compatibility, for example, a physical preamble compatible with the channel access protocol described above, and for example, a physical preamble compatible with the wireless communication system 100 described above. Optionally, a compatible physical preamble may also be referred to as a Legacy Preamble. In some embodiments, the compatible physical preamble may also be understood as: a physical preamble applicable to a compatible device, and the compatible device may refer to a wireless device supporting the channel access protocol described above, or may refer to a wireless device within the wireless communication system 100 described above. The compatible device may or may not include the second device. The existence of the compatible physical preamble can make other devices in addition to the second device detect the existence of the PPDU through carrier detection during CCA, thereby determining that the channel is not idle and performing avoidance. That is, the PPDU including the compatible physical preamble has good forward compatibility, while implementing supplying energy and/or providing a carrier for the second device, it does not negatively affect the device supporting the channel access protocol as described above, and does not cause interference to the communication within the WLAN/Wi-Fi system.

In some embodiments, the compatible physical preamble includes an STF and/or an LTF. Alternatively, for ease of distinction, the STF included in the compatible physical preamble may also be referred to as a Legacy STF (L-STF), and the STF included in the compatible physical preamble may also be referred to as a Legacy LTF (L-LTF).

Optionally, the PPDU further includes a header. The header includes a compatible physical header. The compatible physical header is a physical header capable of forward compatibility, for example, a physical header compatible with the channel access protocol described above, and for example, a physical header compatible with the wireless communication system 100 described above. In some embodiments, the compatible physical header may also be understood as: a physical header applicable to a compatible device, and the compatible device may refer to a wireless device supporting the channel access protocol described above, or may refer to a wireless device within the wireless communication system 100 described above. The compatible device may or may not include the second device. Optionally, a compatible physical header may also be referred to as a Legacy PHY header. The compatible physical header may be used to carry relevant physical information of the PPDU.

In some embodiments, the compatible physical header includes a Signal (SIG) field. Optionally, for ease of distinction, the SIG field included in the compatible physical header may also be referred to as a Legacy SIG (L-SIG) field. The L-SIG field is used, for example, to carry information such as the modulation and coding mode, the number of bytes, the data transmission rate, etc., used in the data portion of the PPDU.

**Format (2):** FIG. 9 illustrates a schematic diagram of a format of a PPDU according to an exemplary embodiment of the present disclosure. The PPDU includes a preamble portion in addition to the first portion. The preamble portion includes a compatible physical preamble and a first preamble. This format not only helps to supply energy and/or provide a carrier for the second device, but also improves the efficiency of the second device receiving the first portion, guarantees the reliability of energy harvesting/backscattering, and avoids conflicts and interference between devices.

In the embodiment of the present disclosure, the compatible physical preamble is a physical preamble capable of forward compatibility, for example, a physical preamble compatible with the channel access protocol described above, and for example, a physical preamble compatible with the wireless communication system 100 described above. Optionally, a compatible physical preamble may also be referred to as a Legacy Preamble. In some embodiments, the compatible physical preamble may also be understood as: a physical preamble applicable to a compatible device, and the compatible device may refer to a wireless device supporting the channel access protocol described above, or may refer to a wireless device within the wireless communication system 100 described above. The compatible device may or may not include the second device. The existence of the compatible physical preamble can make other devices in addition to the second device detect the existence of the PPDU through carrier detection during CCA, thereby determining that the channel is not idle and performing avoidance. That is, the PPDU including the compatible physical preamble has good forward compatibility, while implementing supplying energy and/or providing a carrier for the second device, it does not negatively affect the device supporting the channel access protocol as described above, and does not cause interference to the communication within the WLAN/Wi-Fi system.

In some embodiments, the compatible physical preamble includes an STF and/or an LTF. Alternatively, for ease of distinction, the STF included in the compatible physical preamble may also be referred to as an L-STF, and the STF included in the compatible physical preamble may also be referred to as an L-LTF.

The first preamble is a preamble corresponding to the second device, and it can also be understood that the first preamble is a preamble that can be detected by the second device, and it can also be understood that the first preamble is a preamble for the second device to receive the first portion. Therefore, it can be considered that the first preamble and the compatible physical preamble are applicable to different devices, and unlike the compatibility of the compatible physical preamble, the first preamble is only for the second device, and functions such as channel detection, time-frequency synchronization, and channel estimation of the first preamble are only applicable to the second device.

Alternatively, the first preamble may be referred to as an A-preamble for ease of distinction. The presence of the first preamble may enable the second device to identify the first portion, i.e., support the second device to determine, through the first preamble, whether the PPDU includes a first portion for supplying energy and/or providing a carrier for itself.

In some embodiments, the second device may also obtain synchronization in time and/or frequency through the first preamble.

In some embodiments, the first preamble adopts a modulation mode supported by the second device to facilitate low complexity and low power demodulation by the second device. For example, the second device supports simple modulation modes such as ASK modulation, OOK modulation, FSK modulation, Phase Shift Keying (PSK) modulation, and Binary Phase Shift Keying (BPSK).

In some embodiments, the first preamble employs one of the following coding methods: NRZ coding, Manchester coding, URZ coding, DBP coding, Miller coding, differential coding.

Exemplarily, before performing energy harvesting or sending by way of backscattering, the second device is in a receiving state, and detects the first preamble of the PPDU carrying the first portion in the air interface to determine that the first portion is used to supply energy and/or provide a carrier, thereby performing subsequent corresponding energy harvesting and/or backscattering.

Optionally, the PPDU further includes a header. The header includes a compatible physical header and a first header.

The compatible physical header is a physical header capable of forward compatibility, for example, a physical header compatible with the channel access protocol described above, and for example, a physical header compatible with the wireless communication system 100 described above. In some embodiments, the compatible physical header may also be understood as: a physical header applicable to a compatible device, and the compatible device may refer to a wireless device supporting the channel access protocol described above, or may refer to a wireless device within the wireless communication system 100 described above. The compatible device may or may not include the second device. Optionally, a compatible physical header may also be referred to as a Legacy PHY header. The compatible physical header may be used to carry relevant physical information of the PPDU.

In some embodiments, the compatible physical header includes an SIG field. Optionally, for ease of distinction, the SIG field included in the compatible physical header may also be referred to as an L-SIG field. The L-SIG field is used, for example, to carry information such as the modulation and coding mode, the number of bytes, the data transmission rate, etc., used in the data portion of the PPDU.

The first header is a header corresponding to the second device, and it can also be understood that the first header is a header that can be detected by the second device, and it can also be understood that the first header is a header for the second device to receive the first portion. Therefore, it may be considered that the first header and the compatible physical header are applicable to different devices, and unlike the compatibility of the compatible physical header, the first header is only for the second device, and the information carried by the first header is only applicable to the second device.

Optionally, the first header may be referred to as an A-header for ease of distinction. The first header may be used to carry physical layer control information related to the first portion. For example, the first header may carry at least one of: time domain information of the first portion, frequency domain information of the first portion, a modulation mode for backscattering by the first portion, a data rate for backscattering by the first portion, a coding mode for backscattering by the first portion, and a Cyclic Redundancy Check (CRC) bit corresponding to the first portion. The time domain information of the first portion includes, for example, at least one of: a duration of the first portion, a sending period of the first portion, a starting position of the first portion, or an ending position of the first portion. The frequency domain information of the first portion includes, for example, at least one of: a bandwidth size occupied by the first portion or a bandwidth position occupied by the first portion.

In some embodiments, the first header adopts a modulation mode supported by the second device to facilitate low complexity and low power demodulation by the second device. For example, the second device supports simple modulation modes such as ASK, OOK, FSK, PSK, and BPSK modulation.

In some embodiments, the first header employs one of the following coding methods: NRZ coding, Manchester coding, URZ coding, DBP coding, Miller coding, differential coding.

In some embodiments, the first preamble and/or the first portion indicate whether the first portion is for supplying energy or for providing a carrier.

Optionally, the first preamble and/or the first portion implicitly indicate whether the first portion is for supplying energy or for providing a carrier. Exemplarily, when there is a first sub-field in the first preamble and/or the first portion, it is indicated that the first portion is for supplying energy. When a first sub-field does not exist in the first preamble and/or the first portion, it is indicated that the first portion is for providing a carrier. Exemplarily, when a first sub-field does not exist in the first preamble and/or the first portion, it is indicated that the first portion is for supplying energy. When there is a first sub-field in the first preamble and/or the first portion, it is indicated that the first portion is for providing a carrier.

Optionally, the first preamble and/or the first portion explicitly indicate whether the first portion is for supplying energy or for providing a carrier. Exemplarily, when a second sub-field in the first preamble and/or the first portion has a first value, it indicates that the first portion is for supplying energy. When the second sub-field in the first preamble and/or the first portion has a second value, it indicates that the first portion is for providing a carrier. Exemplarily, when a second sub-field in the first preamble and/or the first portion has a second value, it indicates that the first portion is for supplying energy. When the second sub-field in the first preamble and/or the first portion has a first value, it indicates that the first portion is for providing a carrier. The first value is different from the second value, for example, the first value is 0 and the second value is 1. For example, the first value is 1, and the second value is 0. Other values may be taken, but are not limited here.

### 2. From the perspective of virtual carrier sensing, the PPDU should include at least a MAC header (which may be a compatible MAC header or a first MAC header).

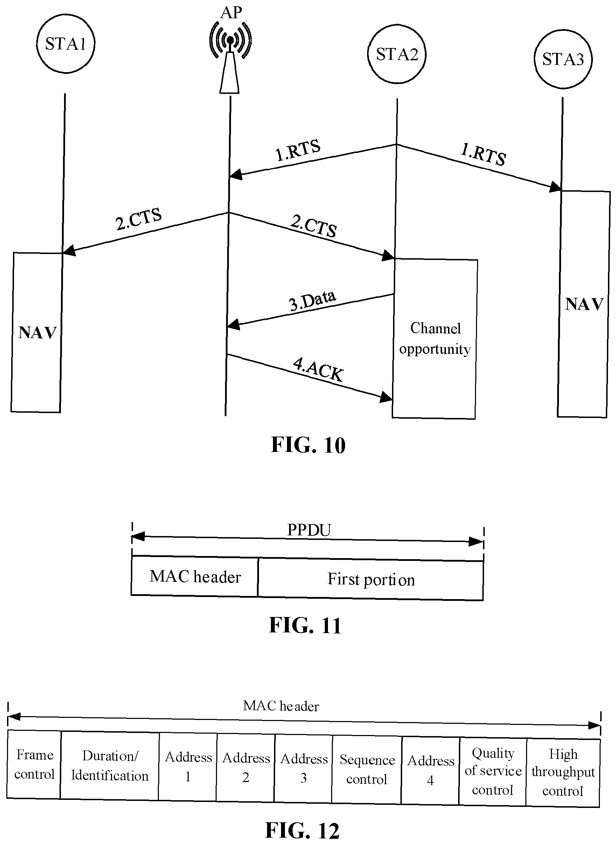

Virtual carrier sensing is implemented by NAV. The MAC header includes a Duration field to indicate the "Duration". After receiving the information, the STA updates its own NAV value through the information, and the timer of the NAV counts down, and the STA can perform CCA only when the countdown reaches 0. Before that, the STA considers that the channel is not idle and does not need to perform CCA. For example, as shown in FIG. 10, STA2 needs to send data to the AP, STA2 sends an RTS frame first, and the RTS frame is received by the AP and STA3. When the STA3 is not a target receiving STA, the STA3 updates its own NAV according to the Duration field of the MAC header of the RTS frame. After receiving the RTS frame, the AP replies with a CTS frame, which is received by STA1 and STA2. When STA1 is not a target receiving STA, it updates its own NAV according to the Duration field of the MAC header of the CTS frame. STA1 and STA3 update the NAV values such that STA1 and STA3 do not start idle channel detection until after the ACK transmission between the AP and STA2 is completed. Therefore, the PPDU should include a MAC header to support in-system devices to implement virtual carrier sensing.

**Format (3):** FIG. 11 illustrates a schematic diagram of a format of a PPDU according to an exemplary embodiment of the present disclosure. The PPDU includes a header in addition to the first portion. The header includes a MAC header. The PPDU including the MAC header allows other devices in addition to the first device and the second device to set NAV, thereby reserving channel occupancy time for the sending of the first portion, ensuring communication efficiency and reliability in the system, and avoiding conflict and interference between devices.

In the embodiment of the present disclosure, the format of the MAC header is not limited, and the format of the MAC header depends on which protocol version the PPDU carrying the first portion is compatible with. For example, if the PPDU carrying the first portion coexists with devices supporting a certain 802.11 technology, the MAC header format adopts the design of that 802.11 protocol.

FIG. 12 shows a schematic format diagram of a MAC header including one or more of the following fields: Frame Control, Duration/ID, Address 1, Address 2, Address 3, Sequence Control, Address 4, Quality of Service (QoS) Control, or High Throughput (HT) Control. It should be understood that the format shown in FIG. 12 is an example and not a limitation, and the present disclosure supports modifying the format of the MAC header according to the actual situation based on the example shown in FIG. 12, such as adding or deleting fields, adjusting the order of fields, increasing or decreasing the number of bytes, increasing or decreasing the number of bits, and the like.

In some embodiments, the format of the MAC header included in the PPDU may refer to the MAC header format in a control frame, a management frame, and a data frame suitable for a WLAN/Wi-Fi system in the related art, for example, various types such as an RTS frame, a CTS frame, a Beacon frame, and the like. Alternatively, the above frame may be referred to as a NAV-setting frame.

In some embodiments, the MAC header also has forward compatibility, such as compatibility with the channel access protocol described above, or compatibility with the wireless communication system 100 described above. In this case, the MAC header may also be referred to as a compatible MAC header or a conventional MAC header. In some embodiments, the compatible MAC header may also be understood as: a MAC header applicable to a compatible device, and the compatible device may refer to a wireless device supporting the channel access protocol described above, or may refer to a wireless device within the wireless communication system 100 described above. The compatible device may or may not include the second device. That is, the compatible MAC header may enable, through the duration field included therein, the compatible device to perform compatible channel access through the duration information.

Certainly, the present disclosure does not exclude the case where the MAC header is a new design, that is, the MAC header in format (3) may be different from the current design in the 802.11 protocol, for example, adopting a MAC header format that may be designed in the future. For ease of distinction, such a MAC header distinct from a compatible MAC header may be referred to as a first MAC header. Unlike the compatibility of a compatible MAC header, the first MAC header is only for the second device, and the information carried by the first MAC header is only applicable to the second device.

### 3. In combination with physical carrier sensing and virtual carrier sensing, the PPDU should include at least a preamble portion and a MAC header.

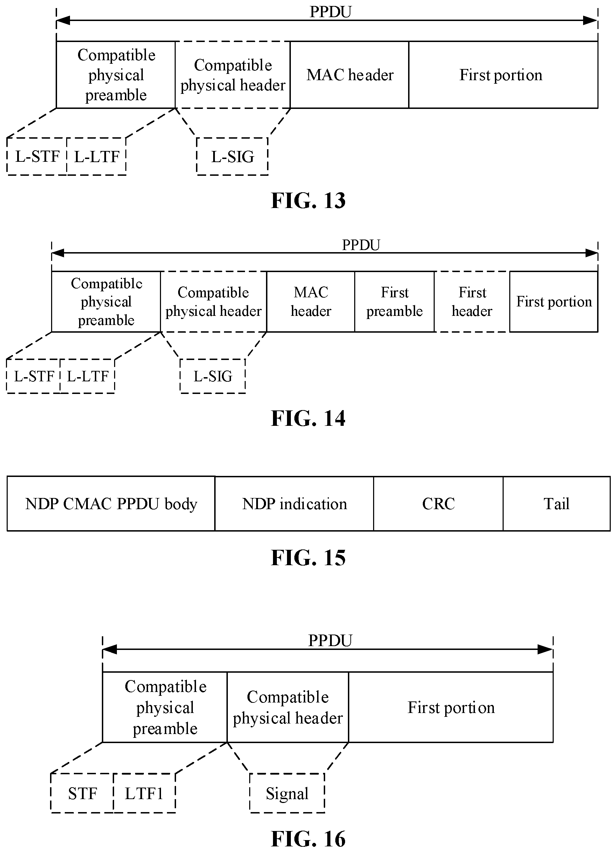

It is possible to combine the requirement of physical carrier sensing with that of virtual carrier sensing, and design a PPDU format that supports both physical carrier sensing and virtual carrier sensing. That is, format (3) is combined with format (1) or format (2).
- Format (3) in combination with format (1): FIG. 13 illustrates a schematic diagram of a format of a PPDU according to an exemplary embodiment of the present disclosure. The PPDU includes a preamble portion and a header in addition to the first portion. The preamble portion includes a compatible physical preamble, and the header includes a MAC header (which may be a compatible MAC header or a first MAC header). Optionally, the header also includes a compatible physical header. In addition, the arrangement order of these portions may be adjusted according to the actual situation, and the portions illustrated in FIG. 13 and the arrangement order thereof are not limited as an example. The relevant contents of the compatible physical preamble and the compatible physical header are referred to the previous description, and will not be described again here.
- Format (3) in combination with format (2): FIG. 14 illustrates a schematic diagram of a format of a PPDU according to an exemplary embodiment of the present disclosure. The PPDU includes a preamble portion and a header in addition to the first portion. The preamble portion includes a compatible physical preamble and a first preamble, and the header includes a MAC header (which may be a compatible MAC header or a first MAC header). Optionally, the header also includes a compatible physical header and/or a first header. In addition, the arrangement order of these portions may be adjusted according to the actual situation, and the portions illustrated in FIG. 14 and the arrangement order thereof are not limited as an example. The relevant contents of the compatible physical preamble, the compatible physical header, the first preamble, and the first header are referred to the previous description, and will not be described again here.

In some embodiments, in a case where a MAC header is present, it may not be necessary to set a first header, such as a PPDU including the following portions: a compatible physical preamble, a compatible physical header, a MAC header, a first preamble, a first portion.

In some embodiments, the first preamble and/or the first portion indicate whether the first portion is for supplying energy or for providing a carrier. Optionally, the first preamble and/or the first portion implicitly indicate whether the first portion is for supplying energy or for providing a carrier. Optionally, the first preamble and/or the first portion explicitly indicate whether the first portion is for supplying energy or for providing a carrier.

### 4. In combination with the design of Null Data PPDU (NDP), the PPDU should include at least a preamble portion and a header.

Because there is a special PPDU: NDP in actual communication, when designing the PPDU format to carry the first portion, it is also possible to consider using the NDP to carry the first portion. In the embodiment of the present disclosure, the NDP frame includes an NDP Carrying Medium Access Control Information (NDP CMAC) frame as an example for schematic description. The NDP CMAC frame includes a physical preamble and a physical header, and does not contain a data portion. The physical preamble includes STF and LTF1, and the physical header includes the Signal field.

**Format (4):** The PPDU includes, in addition to the first portion, a compatible physical preamble and a compatible physical header. This format is particularly suitable for the case of transmission of NDP frames within the system, extending the application scenario of the PPDU containing the first portion, increasing the feasibility for energy harvesting and/or backscattering of the second device.

The compatible physical preamble in the embodiment of the present disclosure is a physical preamble capable of forward compatibility, for example, a physical preamble compatible with the channel access protocol described above, and for example, a physical preamble compatible with the wireless communication system 100 described above. The existence of the compatible physical preamble can make other devices in addition to the second device detect the existence of the PPDU through carrier detection during CCA, thereby determining that the channel is not idle and performing avoidance. That is, the PPDU including the compatible physical preamble has good forward compatibility, while implementing supplying energy and/or providing a carrier for the second device, it does not negatively affect the device supporting the channel access protocol as described above, and does not cause interference to the communication within the WLAN/Wi-Fi system.

It should be noted that the compatible physical preamble in the embodiment of the present disclosure is a physical preamble applicable to an NDP frame, including STF and LTF1.

The compatible physical header in the embodiment of the present disclosure is a physical header capable of forward compatibility, for example, a physical header compatible with the channel access protocol described above, and for example, a physical header compatible with the wireless communication system 100 described above. The compatible physical header may be used to carry relevant physical information of the PPDU.

It should be noted that the compatible physical header in the embodiment of the present disclosure is a physical header suitable for an NDP frame, including a Signal field.

FIG. 15 shows a schematic format diagram of the Signal field. The Signal field includes at least one of the following fields: an NDP CMAC PPDU body, NDP Indication, CRC, or a Tail. The NDP CMAC PPDU body portion includes NDP CMAC PPDU Type information and related control information. For example, if the NDP CMAC PPDU Type indicates that the NDP is a CTS frame, the control information carried by the NDP is CTS information, the NDP frame is an NDP CTS frame, and the NDP CMAC PPDU body portion thereof includes a Duration field. Similarly, the NDP CMAC PPDU Type may also indicate that the NDP is a frame of the following type: an NDP Contention Free Frame (NDP CF-End Frame), or an NDP ACK Frame, or an NDP Power Saving Poll ACK Frame (NDP PS-Poll-Ack Frame), or a Very High Throughput NDP Announcement Frame (VHT NDPA Frame), and so on.

Exemplarily, when the second device coexists with a device that supports the 802.11ah protocol, the first portion may be carried through the NDP frame to provide a carrier and/or supply energy for the second device. In this case, the Duration field in the Signal field of the NDP frame may function as a NAV-setting, thereby reserving a channel occupancy time for the sending of the first portion.

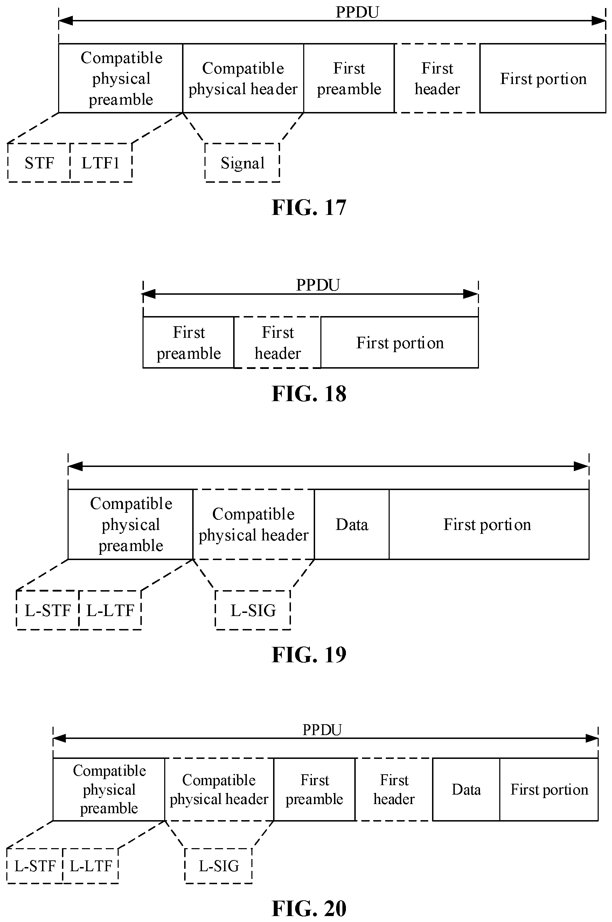

In fact, the NDP frame is a special PPDU, and the PPDU format combined with the NDP frame provided by the embodiment of the present disclosure can be regarded as a special case of the aforementioned format (1) or format (2), and the difference lies in the fact that the compatible physical preamble and the compatible physical header are different. It can be understood that the formats of the physical preamble and physical header of the NDP frame and the non-NDP frame should be inherently different.
- Format (4) as a special example of format (1): FIG. 16 illustrates a schematic diagram of a format of a PPDU according to an exemplary embodiment of the present disclosure. The PPDU includes a preamble portion and a header in addition to the first portion. The preamble portion includes a compatible physical preamble and the header includes a compatible physical header. The compatible physical preamble includes STF and LTF1, and the compatible physical header includes the Signal field. In addition, the arrangement order of these portions may be adjusted according to the actual situation, and the portions illustrated in FIG. 16 and the arrangement order thereof are not limited as an example. The relevant contents of the compatible physical preamble and the compatible physical header are referred to the previous description, and will not be described again here.
- Format (4) as a special example of format (2): FIG. 17 illustrates a schematic diagram of a format of a PPDU according to an exemplary embodiment of the present disclosure. The PPDU includes a preamble portion and a header in addition to the first portion. The preamble portion includes a compatible physical preamble and a first preamble, and the header includes a compatible physical header. Optionally, the header further includes a first header. The compatible physical preamble includes STF and LTF1, and the compatible physical header includes the Signal field. In addition, the arrangement order of these portions may be adjusted according to the actual situation, and the portions illustrated in FIG. 17 and the arrangement order thereof are not limited as an example. The relevant contents of the compatible physical preamble, the compatible physical header, the first preamble, and the first header are referred to the previous description, and will not be described again here.

In some embodiments, the first preamble and/or the first portion indicate whether the first portion is for supplying energy or for providing a carrier. Optionally, the first preamble and/or the first portion implicitly indicate whether the first portion is for supplying energy or for providing a carrier. Optionally, the first preamble and/or the first portion explicitly indicate whether the first portion is for supplying energy or for providing a carrier.

### 5. There is no need to set a compatible information field in PPDU.

In the PPDU formats shown in the formats (1) to (4), in order to realize coexistence with other devices in the system, it is considered that the PPDU contains a compatible information field so that other devices can detect whether the channel is busy, thereby reserving the channel occupancy time for the sending of the first portion. Then, is there a case where the PPDU does not need to contain a compatible information field?

It can be understood that since the second device has a simple structure and may not support demodulation of signals from the first device or other devices, such as Orthogonal Frequency-Division Multiplexing (OFDM) signals. In that case, it is difficult for the second device, like other devices, to use the carrier sensing techniques described above to determine whether the channel is idle and thus actively occupy the channel or back off. However, it is not excluded that the second device has a need for channel occupancy. For this purpose, a possible design may be considered in which the channel is occupied by other devices and the channel is shared for use by a second device. In this case, the first device may directly send the PPDU to the second device within the shared channel, and there is no need to reserve the channel occupancy time for the sending of the first portion.

For example, after the other device acquires the Transmission Opportunity (TXOP) through the channel access technology, the TXOP is shared with the second device for use. In the TXOP, if the first device needs to send the PPDU including the first portion, it is no longer necessary to include a compatible information field in the PPDU to occupy the channel for the transmission of the first portion.

For example, after the other device acquires a Service Period (SP) through the channel access technology, the SP is shared with the second device for use. In the SP, if the first device needs to send the PPDU including the first portion, it is no longer necessary to include a compatible information field in the PPDU to occupy the channel for the transmission of the first portion.

**Format (5):** FIG. 18 illustrates a schematic diagram of a format of a PPDU according to an exemplary embodiment of the present disclosure. The PPDU includes a preamble portion in addition to the first portion. The preamble portion includes a first preamble. This format not only realizes energy supply and/or carrier supply for the second device, but also saves transmission resources and PPDU overhead, and extends the application scenarios of the PPDU including the first portion.

The first preamble is a preamble corresponding to the second device, and it can also be understood that the first preamble is a preamble that can be detected by the second device, and it can also be understood that the first preamble is a preamble for the second device to receive the first portion. Alternatively, the first preamble may be referred to as an A-preamble for ease of distinction. The presence of the first preamble may enable the second device to identify the first portion, i.e., support the second device to determine, through the first preamble, whether the PPDU includes a first portion for supplying energy and/or providing a carrier for itself.

In some embodiments, the second device may also obtain synchronization in time and/or frequency through the first preamble.

In some embodiments, the first preamble adopts a modulation mode supported by the second device to facilitate low complexity and low power demodulation by the second device. For example, the second device supports simple modulation modes such as ASK, OOK, FSK, PSK, and BPSK modulation.

In some embodiments, the first preamble employs one of the following coding methods: NRZ coding, Manchester coding, URZ coding, DBP coding, Miller coding, differential coding.

Exemplarily, before performing energy harvesting or sending by way of backscattering, the second device is in a receiving state, and detects the first preamble of the PPDU carrying the first portion in the air interface to determine that the first portion is used to supply energy and/or provide a carrier, thereby performing subsequent corresponding energy harvesting and/or backscattering.

Optionally, the PPDU further includes a header. The header includes a first header. The first header is a header corresponding to the second device, and it can also be understood that the first header is a header that can be detected by the second device, and it can also be understood that the first header is a header for the second device to receive the first portion. Optionally, the first header may be referred to as an A-header for ease of distinction. The first header may be used to carry physical layer control information related to the first portion. For example, the first header may carry at least one of: time domain information of the first portion, frequency domain information of the first portion, a modulation mode for backscattering by the first portion, a data rate for backscattering by the first portion, a coding mode for backscattering by the first portion, and a Cyclic Redundancy Check (CRC) bit corresponding to the first portion. The time domain information of the first portion includes, for example, at least one of: a duration of the first portion, a sending period of the first portion, a starting position of the first portion, or an ending position of the first portion. The frequency domain information of the first portion includes, for example, at least one of: a bandwidth size occupied by the first portion or a bandwidth position occupied by the first portion.

In some embodiments, the first header adopts a modulation mode supported by the second device to facilitate low complexity and low power demodulation by the second device. For example, the second device supports simple modulation modes such as ASK, OOK, FSK, PSK, and BPSK modulation.

In some embodiments, the first header employs one of the following coding methods: NRZ coding, Manchester coding, URZ coding, DBP coding, Miller coding, differential coding.

In some embodiments, the first preamble and/or the first portion indicate whether the first portion is for supplying energy or for providing a carrier. Optionally, the first preamble and/or the first portion implicitly indicate whether the first portion is for supplying energy or for providing a carrier. Optionally, the first preamble and/or the first portion explicitly indicate whether the first portion is for supplying energy or for providing a carrier.

### 6. In a case where PPDU also carries data.

The PPDU formats shown in the formats (1) to (5) do not include a data portion. In fact, it is also possible to consider a design that includes both the data portion and the first portion in the PPDU, so as to improve the transmission efficiency in the system.

**Format (6):** The PPDU includes a data portion in addition to the first portion. The data portion may include data sent to the second device, or may include data sent to other devices in addition to the first device and the second device. In the embodiment of the present disclosure, take the PPDU containing data sent to the second device as an example, and the data portion can be referred to as A-Data for convenience of distinction.

In some embodiments, the data portion adopts a modulation mode supported by the second device to facilitate low complexity and low power demodulation by the second device. For example, the second device supports simple modulation modes such as ASK, OOK, FSK, PSK, and BPSK modulation.

In some embodiments, the data portion employs one of the following coding methods: NRZ coding, Manchester coding, URZ coding, DBP coding, Miller coding, differential coding.
- Format (6) in combination with format (1): FIG. 19 illustrates a schematic diagram of a format of a PPDU according to an exemplary embodiment of the present disclosure. The PPDU includes a preamble portion and a data portion in addition to the first portion. The preamble portion includes a compatible physical preamble. Optionally, the PPDU further includes a header. The header includes a compatible physical header. The relevant contents of the compatible physical preamble and the compatible physical header are referred to the previous description, and will not be described again here.
- Format (6) in combination with format (2): FIG. 20 illustrates a schematic diagram of a format of a PPDU according to an exemplary embodiment of the present disclosure. The PPDU includes a preamble portion and a data portion in addition to the first portion. The preamble portion includes a compatible physical preamble and a first preamble. Optionally, the PPDU further includes a header. The header includes a compatible physical header and/or a first header. The relevant contents of the compatible physical preamble, the compatible physical header, the first preamble, and the first header are referred to the previous description, and will not be described again here.

The first header may indicate relevant information of the data portion, such as a modulation coding mode, a data transmission rate, a length, a number of bytes, and the like, in addition to carrying the relevant information of the first portion described above.

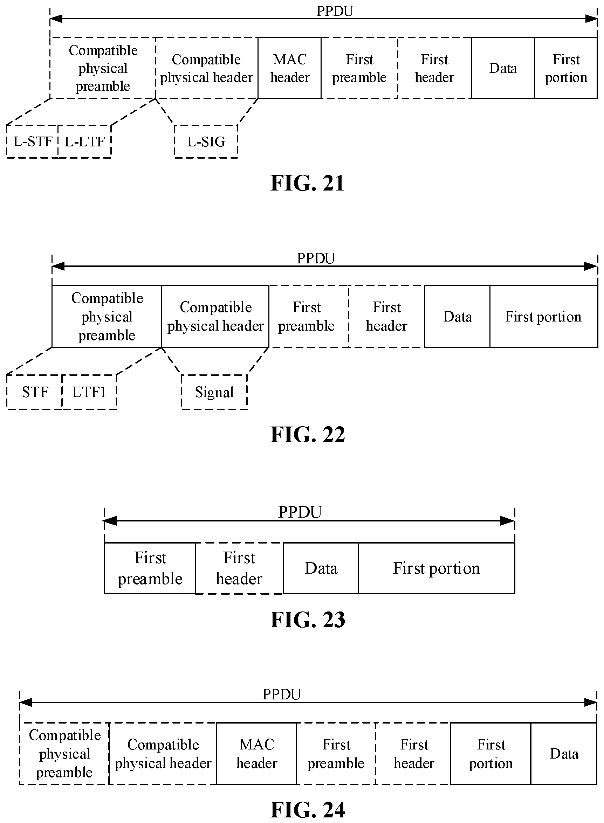

In some embodiments, the first preamble and/or the first portion indicate whether the first portion is for supplying energy or for providing a carrier. Optionally, the first preamble and/or the first portion implicitly indicate whether the first portion is for supplying energy or for providing a carrier. Optionally, the first preamble and/or the first portion explicitly indicate whether the first portion is for supplying energy or for providing a carrier.
- Format (6) in combination with format (3): FIG. 21 illustrates a schematic diagram of a format of a PPDU according to an exemplary embodiment of the present disclosure. The PPDU includes a header and a data portion in addition to the first portion. The header includes a MAC header (which may be a compatible MAC header or a first MAC header). Optionally, the header also includes a compatible physical header and/or a first header. Optionally, the PPDU further includes a preamble portion. Optionally, the preamble portion includes a compatible physical preamble and/or a first preamble. The relevant contents of the MAC header, the compatible physical preamble, the compatible physical header, the first preamble, and the first header are referred to the previous description, and will not be described again here.

The first header may indicate relevant information of the data portion, such as a modulation coding mode, a data transmission rate, a length, a number of bytes, and the like, in addition to carrying the relevant information of the first portion described above.

In some embodiments, in a case where a MAC header is present, it may not be necessary to set a first header, such as a PPDU including the following portions: a compatible physical preamble, a compatible physical header, a MAC header, a first preamble, data, a first portion.

In some embodiments, the first preamble and/or the first portion indicate whether the first portion is for supplying energy or for providing a carrier. Optionally, the first preamble and/or the first portion implicitly indicate whether the first portion is for supplying energy or for providing a carrier. Optionally, the first preamble and/or the first portion explicitly indicate whether the first portion is for supplying energy or for providing a carrier.
- Format (6) in combination with format (4): FIG. 22 illustrates a schematic diagram of a format of a PPDU according to an exemplary embodiment of the present disclosure. The PPDU includes a preamble portion, a header, and a data portion in addition to the first portion. The preamble portion includes a compatible physical preamble and the header includes a compatible physical header. Optionally, the preamble portion further includes a first preamble. Optionally, the header further includes a first header. Note that the compatible physical preamble shown in FIG. 22 is a physical preamble applicable to an NDP frame, and the compatible physical header shown in FIG. 22 is a physical header applicable to an NDP frame.

The relevant contents of the compatible physical preamble, the compatible physical header, the first preamble, and the first header are referred to the previous description, and will not be described again here. The first header may indicate relevant information of the data portion, such as a modulation coding mode, a data transmission rate, a length, a number of bytes, and the like, in addition to carrying the relevant information of the first portion described above.

In some embodiments, the first preamble and/or the first portion indicate whether the first portion is for supplying energy or for providing a carrier. Optionally, the first preamble and/or the first portion implicitly indicate whether the first portion is for supplying energy or for providing a carrier. Optionally, the first preamble and/or the first portion explicitly indicate whether the first portion is for supplying energy or for providing a carrier.
- Format (6) in combination with format (5): FIG. 23 illustrates a schematic diagram of a format of a PPDU according to an exemplary embodiment of the present disclosure. The PPDU includes a preamble portion and a data portion in addition to the first portion. The preamble portion includes a first preamble. Optionally, the PPDU further includes a header. Optionally, the header includes a first header. The relevant contents of the first preamble, and the first header are referred to the previous description, and will not be described again here.

The first header may indicate relevant information of the data portion, such as a modulation coding mode, a data transmission rate, a length, a number of bytes, and the like, in addition to carrying the relevant information of the first portion described above.

In some embodiments, the first preamble and/or the first portion indicate whether the first portion is for supplying energy or for providing a carrier. Optionally, the first preamble and/or the first portion implicitly indicate whether the first portion is for supplying energy or for providing a carrier. Optionally, the first preamble and/or the first portion explicitly indicate whether the first portion is for supplying energy or for providing a carrier.

In addition, in the 6 variations of format (6) described above, the arrangement order of the respective portions can be adjusted according to the actual situation, and the arrangement order shown in FIGS. 19 to 21 is an example and is not limited. For example, in some scenarios, when the second device needs to send a signal through the first portion first and then receive a PPDU containing the first portion, the data portion needs to be after the first portion. For another example, the MAC header is after the first preamble and the first header. For another example, the first preamble and the first header are after the data portion. For another example, the MAC header is after the data portion.

For example, the second device first sends data to the first device, and then receives ACK information fed back by the first device. In this case, the data portion carries ACK information from the first device to the second device, and the data portion needs to be after the first portion.

Taking the format (6) combined with the format (3) as an example, as shown in FIG. 24, the data portion is after the first portion. Here, the instruction information carried by the first header may indicate relevant information of the PPDU format, such as the relevant information of the first portion, for example, one or more of: time domain information of the first portion, frequency domain information of the first portion, a modulation mode for backscattering by the first portion, a data rate for backscattering by the first portion, a coding mode for backscattering by the first portion, or CRC bits corresponding to the first portion. Other variations of format (6) may be adjusted with reference to FIG. 24, and will not be shown one by one again, but it can be understood that the arrangement order of the respective portions may be adjusted according to the implementation situation.

### 7. In a case where the first portion included in the PPDU is not dedicated to supplying energy and/or providing a carrier.

The first portion shown in formats (1) to (6) may be dedicated to supplying energy to the second device, or dedicated to providing a carrier for the second device, or dedicated to supplying energy and providing a carrier for the second device. However, from the perspectives of compatibility and resource saving, it is also possible to realize multiplexing of existing signals by taking other signals in the air interface as a first portion. Other signals in the air interface, such as signals transported between the first device and other devices, include at least one of: a control frame, a management frame, or a data frame.

To support the second device in identifying that other signals in the air interface can be used as the first portion, it may be considered to add a first preamble and/or a first header before the first portion. The presence of the first preamble enables the second device to determine whether the PPDU includes a first portion for supplying energy and/or providing a carrier for itself. The first header may be used to carry physical layer control information related to the first portion. Specifically, reference may be made to the foregoing and will not be repeated here.

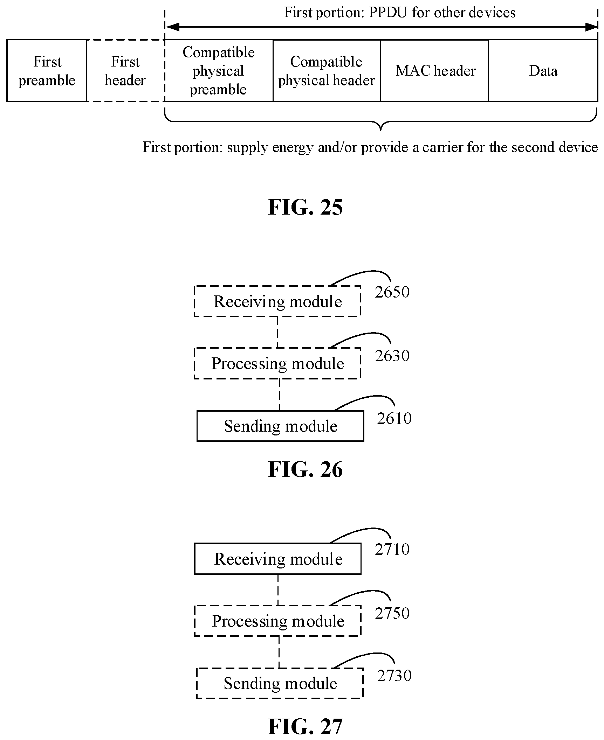

**Format (7):** FIG. 25 illustrates a schematic diagram of a format of a PPDU according to an exemplary embodiment of the present disclosure. The PPDU includes a first portion and includes a first preamble and/or a first header, and the first portion includes one or more of: a compatible physical preamble, a compatible physical header, a MAC header (which may be a compatible MAC header or a first MAC header), or data. Which fields the first portion specifically includes depends on what type of frame the first portion is originally used as, that is, depends on what function the first portion has with respect to other devices. Other devices are, for example, a legacy station (Legacy STA), a Legacy access point (Legacy AP), and the like.

Exemplarily, the first device sends a first preamble and a first header before sending a PPDU for indicating to the second device that the signal after the first preamble and the first header may be used as a first portion, that is, for indicating to the second device that the signal after the first preamble and the first header may be used to supply energy and/or provide a carrier. In this case, for other devices in addition to the second device, the signal after the first preamble and the first header is still the PPDU (such as the PPDU for the legacy STA), but for the second device, through the indication of the first preamble and the first header, it can harvest energy and/or perform backscattering through the signal after the first preamble and the first header.

In some embodiments, in a case where a MAC header is present, it may not be necessary to set a first header. A PPDU includes the following portions: a compatible physical preamble, a compatible physical header, a MAC header, a first preamble, a first portion.

In some embodiments, in a case where a MAC header is present, it may not be necessary to set a first header. A PPDU includes the following portions: a first preamble, a first portion.

In some embodiments, the first preamble and/or the first portion indicate whether the first portion is for supplying energy or for providing a carrier. Optionally, the first preamble and/or the first portion implicitly indicate whether the first portion is for supplying energy or for providing a carrier. Optionally, the first preamble and/or the first portion explicitly indicate whether the first portion is for supplying energy or for providing a carrier.

FIG. 26 illustrates a structural block diagram of an apparatus for communication according to an exemplary embodiment of the present disclosure, which may be implemented as the first device described above, or may be implemented as a part of the first device described above. Alternatively, the apparatus may be a wireless communication apparatus/wireless apparatus supporting a WLAN/Wi-Fi protocol (such as the 802.11 protocol). The apparatus includes a sending module 2610. Optionally, the apparatus further includes a processing module 2630 and/or a receiving module 2650.

The sending module 2610 is configured to send a PPDU, the PPDU including a first portion for supplying energy and/or providing a carrier for a second device.

In some embodiments, the PPDU further includes at least one of: a preamble portion, a header, or a data portion.

In some embodiments, the processing module 2630 is configured to generate at least one of: a preamble portion, a header, or a data portion.

In some embodiments, the preamble portion includes at least one of: a compatible physical preamble, or a first preamble.

In some embodiments, the processing module 2630 is configured to generate at least one of: a compatible physical preamble, or a first preamble.

In some embodiments, the first preamble is used for the second device to determine the first portion.

In some embodiments, the compatible physical preamble includes at least one of the following fields: STF, LTF, or LTF1.

In some embodiments, the processing module 2630 is configured to generate at least one of the following fields: STF, LTF, or LTF1.

In some embodiments, the header includes at least one of: a compatible physical header, a MAC header, or a first header.

In some embodiments, the processing module 2630 is configured to generate at least one of: a compatible physical header, a MAC header, or a first header.

In some embodiments, the first header is configured to carry relevant information of the first portion.

In some embodiments, the relevant information of the first portion includes at least one of: time domain information of the first portion, frequency domain information of the first portion, a modulation mode for backscattering via the first portion, a data rate for backscattering via the first portion, a coding mode for backscattering via the first portion, or a CRC bit corresponding to the first portion.

In some embodiments, the compatible physical header includes a signal field.

In some embodiments, the data portion includes data sent to the second device.

In some embodiments, the first portion includes at least one of: a compatible physical preamble, a compatible physical header, a MAC header, or a data portion.

In some embodiments, the processing module 2630 is configured to generate the signal field and/or the data portion and/or the first portion.

In some embodiments, the apparatus further includes a receiving module 2650 for receiving at least one of: a data frame, a control frame, or a management frame.

In some embodiments, the receiving module 2650 is configured to receive a backscattering signal from a second device.

In some embodiments, the second device includes at least one of the following devices: an ambient IoT (A-IoT) device, a zero-power device, an ultra low power device, a low power device, a passive IoT device, a device for harvesting radio frequency energy, or a device for harvesting electromagnetic wave energy.

In some embodiments, the sending module 2610 is configured to perform operation 520.

The above-described related contents in "Regarding the PPDU format" are also applicable to the communication device illustrated in FIG. 26, and will not be described again here.

In summary, the apparatus provided by the embodiment of the present disclosure supports the PPDU as a basic unit for a wireless device to send a signal at an air interface in a WLAN/Wi-Fi system, carries a first portion for supplying energy and/or providing a carrier, thereby supporting the second device to operate flexibly and efficiently in the WLAN/Wi-Fi system, and providing a feasible scheme for the second device to harvest ambient energy and/or backscatter signals in the WLAN/Wi-Fi system.

FIG. 27 illustrates a structural block diagram of an apparatus for communication according to an exemplary embodiment of the present disclosure, which may be implemented as the second device described above, or may be implemented as a part of the second device described above. Alternatively, the apparatus may be a wireless communication apparatus/wireless apparatus supporting a WLAN/Wi-Fi protocol (such as the 802.11 protocol). The apparatus includes a receiving module 2710. Optionally, the apparatus further includes a sending module 2730 and/or a processing module 2750.

The receiving module 2110 is configured to receive a PPDU, the PPDU including a first portion for supplying energy and/or providing a carrier for the apparatus.

In some embodiments, the PPDU further includes at least one of: a preamble portion, a header, or a data portion.

In some embodiments, the preamble portion includes at least one of: a compatible physical preamble, or a first preamble.

In some embodiments, the first preamble is used for the apparatus to determine the first portion.

In some embodiments, the compatible physical preamble includes at least one of the following fields: STF, LTF, or LTF1.

In some embodiments, the header includes at least one of: a compatible physical header, a MAC header, or a first header.

In some embodiments, the first header is configured to carry relevant information of the first portion.

In some embodiments, the relevant information of the first portion includes at least one of: time domain information of the first portion, frequency domain information of the first portion, a modulation mode for backscattering via the first portion, a data rate for backscattering via the first portion, a coding mode for backscattering via the first portion, or a CRC bit corresponding to the first portion.

In some embodiments, the compatible physical header includes a signal field.

In some embodiments, the data portion includes data sent to the apparatus.

In some embodiments, the first portion includes at least one of: a compatible physical preamble, a compatible physical header, a MAC header, or a data portion.

In some embodiments, the apparatus includes at least one of the following devices: an ambient IoT (A-IoT) device, a zero-power device, an ultra low power device, a low power device, a passive IoT device, a device for harvesting radio frequency energy, or a device for harvesting electromagnetic wave energy.

In some embodiments, the apparatus further includes a sending module 2730 for sending a signal or backscattering a signal. Exemplarily, the sending module 2730 backscatters a first signal based on a first portion in the PPDU.

In some embodiments, the processing module 2750 is configured to detect the PPDU and/or to implement energy harvesting based on the first portion.

In some embodiments, the energy used by the sending module 2730 is energy harvested based on the first portion.

The above-described related contents in "Regarding the PPDU format" are also applicable to the communication device illustrated in FIG. 27, and will not be described again here.

In summary, the apparatus provided by the embodiment of the present disclosure supports the PPDU as a basic unit for a wireless device to send a signal at an air interface in a WLAN/Wi-Fi system, carries a first portion of supplying energy and/or providing a carrier for the second device, thereby realizing flexible and efficient operation in the WLAN/Wi-Fi system, and providing a feasible scheme for the communication mode of ambient energy harvesting and/or backscattering in the WLAN/Wi-Fi system.

It should be noted that when the device provided in the above-described embodiment realizes its function, the division of the above-described functional modules is only used as an example, and in practical application, the above-described function allocation can be completed by different functional modules as necessary, that is, the internal structure of the communication device can be divided into different functional modules to complete all or part of the above-described functions. In addition, the apparatus provided in the above-described embodiment belongs to the same concept as the method embodiment.

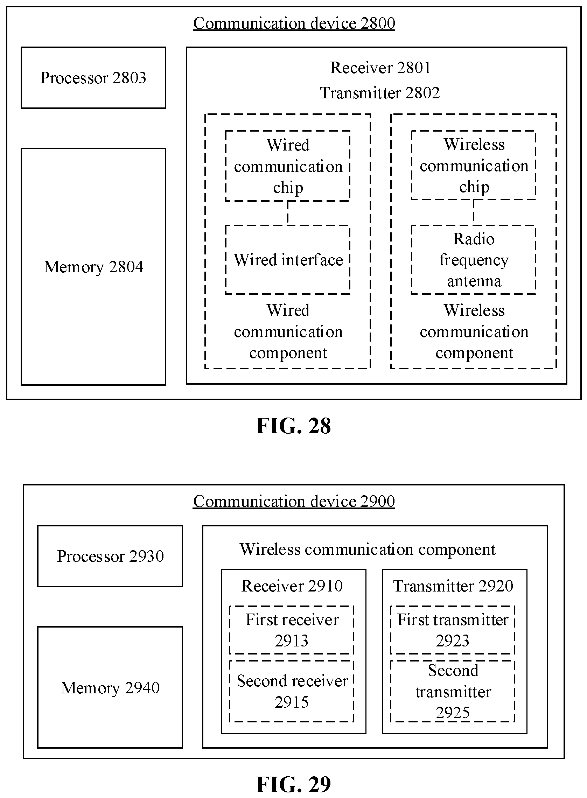

FIG. 28 illustrates a schematic structural diagram of a communication device 2800 provided by an exemplary embodiment of the present disclosure, including at least one of a receiver 2801, a transmitter 2802, a processor 2803, a memory 2804, or a bus (not shown). The communication device 2800 is configured to perform some or all of the operations performed by the first device described above. The receiver 2801 is configured to implement a receiving function, and the transmitter 2802 is configured to implement a sending function.

In some embodiments, the receiver 2801 may be used to implement the functions and operations of the above-described receiving module 2650, and the transmitter 2802 may be used to implement the functions and operations of the above-described sending module 2610.

Optionally, the receiver 2801 and the transmitter 2802 may be implemented as a communication component, which may be a communication chip, which may be referred to as a transceiver. Alternatively, the receiver 2801 and the transmitter 2802 may be implemented as a wireless communication component and/or a wired communication component. Optionally, the wireless communication component includes a wireless communication chip and/or a radio frequency antenna. Optionally, the wired communication component includes a wired communication chip and/or a wired interface.

The processor 2803 includes one or more processing cores, and executes various functional applications and information processing by running software programs and modules. In some embodiments, the processor 2803 may be used to implement the functions and operations of the processing module 2630 described above. The memory 2804 may be used to store a computer program executed by the processor 2803 for executing the computer program to implement various operations in the method embodiments described above.

In some embodiments, the memory 2804 may be connected to the processor 2803, the receiver 2801, and transmitter 2802.

Further, the Memory 2804 may be implemented by any type of volatile or non-volatile storage device including, but not limited to, a magnetic or optical disks, an Electrically-Erasable Programmable Read Only Memory (EEPROM), an Erasable Programmable Read Only Memory (EPROM), a Static Random Access Memory (SRAM), a Read-Only Memory (ROM), a magnetic memory, a flash memory, a Programmable Read-Only Memory (PROM), or a combination thereof.

In some embodiments, the receiver 2801 independently receives signals/data, or the processor 2803 controls the receiver 2801 to receive signals/data, or the processor 2803 requests the receiver 2801 to receive signals/data, or the processor 2803 cooperates with the receiver 2801 to receive signals/data.

In some embodiments, the transmitter 2802 sends signals/data independently, or the processor 2803 controls the transmitter 2802 to send signals/data, or the processor 2803 requests the transmitter 2802 to send signals/data, or the processor 2803 cooperates with the transmitter 2802 to send signals/data.

For details not described in detail in this embodiment, refer to the above embodiment, and will not be described in detail here.

FIG. 29 illustrates a schematic structural diagram of a communication device 2900 provided by an exemplary embodiment of the present disclosure, including at least one of a receiver 2910, a transmitter 2920, a processor 2930, a memory 2940, or a bus (not shown). The communication device 2900 may be configured to perform some or all of the operations performed by the second device described above. The receiver 2910 is configured to implement a receiving function, and the transmitter 2920 is configured to implement a sending function.

In some embodiments, the receiver 2910 and the transmitter 2920 may be implemented as a communication component, which may be a communication chip, which may be referred to as a transceiver. For example, the receiver 2910 and the transmitter 2920 are implemented as one wireless communication component. Optionally, the wireless communication component includes a wireless communication chip and/or a radio frequency antenna (not shown).

In some embodiments, the receiver 2910 may be used to implement the functions and operations of the above-described receiving module 2710, and the transmitter 2920 may be used to implement the functions and operations of the above-described sending module 2730.

In some embodiments, the receiver 2910 may be implemented as a first receiver 2913 and a second receiver 2915. Optionally, the first receiver 2913 and the second receiver 2915 are two independently operated receivers, that is, the receiver 2910 includes two mutually independent receivers: the first receiver 2913 and the second receiver 2915. Optionally, the receiver 2910 is implemented as a combined receiver of the first receiver 2913 and the second receiver 2915.

In some embodiments, the first receiver 2913 is implemented as a Wake-up Receiver (WUR), which may also be referred to as a Low Power WUR (LP-WUR), an Ultra Low Power WUR (ULP-WUR), a low power receiver, an ultra-low power receiver, a zero-power receiver, a secondary receiver, or the like.

In some embodiments, the second receiver 2915 is implemented as a primary receiver or a Legacy Receiver.

In some embodiments, the transmitter 2920 may be used to implement the functions and operations of the sending module 2730 described above. Alternatively, the transmitter 2920 may be implemented as a first transmitter 2923 and/or a second transmitter 2925. Optionally, the first transmitter 2923 and the second transmitter 2925 are two transmitters that operate independently, that is, the transmitter 2920 includes two mutually independent transmitters: the first transmitter 2923 and the second transmitter 2925. Optionally, the transmitter 2920 is implemented as a combined transmitter of the first transmitter 2923 and the second transmitter 2925.

In some embodiments, the first transmitter 2923 is implemented as a backscattering transmitter and the second transmitter 2925 is implemented as a primary transmitter.

In some embodiments, the processor 2930 and the receiver 2910 may be implemented as one module, or the processor 2930 may be implemented as part of the receiver 2910.

The processor 2930 includes one or more processing cores, and executes various functional applications and information processing by running software programs and modules. In some embodiments, the processor 2930 may be used to implement the functions and operations of the processing module 2750 described above.

The memory 2940 may be used to store a computer program executed by the processor 2930 for executing the computer program to implement various operations in the method embodiments described above.

In some embodiments, the memory 2940 may be connected to the processor 2930, the receiver 2910, and transmitter 2920. Further, the memory 2940 may be implemented by any type of volatile or non-volatile storage device, including, but not limited to, magnetic or optical disks, an EEPROM, an EPROM, an SRAM, a ROM, a magnetic memory, a flash memory, a PROM, or a combination thereof.

In some embodiments, the receiver 2910 independently receives signals/data, or the processor 2930 controls the receiver 2910 to receive signals/data, or the processor 2930 requests the receiver 2910 to receive signals/data, or the processor 2930 cooperates with the receiver 2910 to receive signals/data.

In some embodiments, the transmitter 2920 sends signals/data independently, or the processor 2930 controls the transmitter 2920 to send signals/data, or the processor 2930 requests the transmitter 2920 to send signals/data, or the processor 2930 cooperates with the transmitter 2920 to send signals/data.

For details not described in detail in this embodiment, refer to the above embodiment, and will not be described in detail here.

In an exemplary embodiment of the present disclosure, there is also provided a chip including a programmable logic circuit and/or program instructions for implementing the method for communication provided by each of the above-described method embodiments when the chip is run on a communication device.

In some embodiments, the chip includes a sending module 2610. Optionally, the chip further includes a processing module 2630 and/or a receiving module 2650. The relevant content can be referred to the foregoing, and will not be described again here.

In some embodiments, the chip includes a receiving module 2710. Optionally, the chip further includes a sending module 2730 and/or a processing module 2750. The relevant content can be referred to the foregoing, and will not be described again here.

In an exemplary embodiment of the present disclosure, there is also provided a computer-readable storage medium in which at least one program is stored, and the at least one program is loaded and executed by the processor to implement the method for communication provided by each of the above-described method embodiments.

In an exemplary embodiment of the present disclosure, there is also provided a computer program product, the computer program product includes computer instructions, the computer instructions are stored in a computer-readable storage medium, a processor acquires the computer instructions from the computer-readable storage medium, and the processor executes the computer instructions to implement the method for communication provided by each of the above-described method embodiments.

In an exemplary embodiment of the present disclosure, there is also provided a computer program, the computer program includes computer instructions, the computer instructions are stored in a computer-readable storage medium, a processor acquires the computer instructions from the computer-readable storage medium, and the processor executes the computer instructions to implement the method for communication provided by each of the above-described method embodiments.

The skilled person in the art can understand that all or part of the operations in the above-mentioned embodiments can be implemented by hardware, or by a program instructing related hardware. The program can be stored in a computer-readable storage medium, and the storage medium mentioned can be a read-only memory, a magnetic disk or an optical disk, etc.

The above are only optional embodiments of the present disclosure, and are not intended to limit the present disclosure. Any modification, equivalent substitution, improvement, etc. made within the spirit and principles of the present disclosure shall be included in the scope of protection of the present disclosure.

## Claims

1. A method for communication, applied to a first device, the method comprising:
sending a physical layer protocol data unit (PPDU), the PPDU comprising a first portion for supplying energy and/or providing a carrier for a second device.

2. The method of claim 1, wherein the PPDU further comprises at least one portion of: a preamble portion, a header, or a data portion.

3. The method of claim 2, wherein the preamble portion comprises at least one of: a compatible physical preamble, or a first preamble.

4. The method of claim 3, wherein the first preamble is used for the second device to determine the first portion.

5. The method of claim 3 or 4, wherein the compatible physical preamble comprises at least one of:
a short training field (STF), a long training field (LTF), or an LTF1.

6. The method of any one of claims 2 to 5, wherein the header comprises at least one of: a compatible physical header, a medium access control (MAC) header, or a first header.

7. The method of claim 6, wherein the first header is used to carry relevant information of the first portion.

8. The method of claim 7, wherein the relevant information of the first portion comprises at least one of:
time domain information of the first portion, frequency domain information of the first portion, a modulation mode for backscattering via the first portion, a data rate for backscattering via the first portion, a coding mode for backscattering via the first portion, or a cyclic redundancy check bit corresponding to the first portion.

9. The method of any one of claims 6 to 8, wherein the compatible physical header comprises a signal (SIG) field.

10. The method of any one of claims 2 to 9, wherein the data portion comprises data sent to the second device.

11. The method of any one of claims 1 to 10, wherein the first portion comprises at least one of: a compatible physical preamble, a compatible physical header, a MAC header, or a data portion.

12. The method of any one of claims 1 to 11, wherein the second device comprises at least one of: an Ambient Internet of Things (A-IoT) device, a zero-power device, an ultra low power device, a low power device, or a passive Internet of Things (IoT) device.

13. A method for communication, applied to a second device, the method comprising:
receiving a physical layer protocol data unit (PPDU), the PPDU comprising a first portion for supplying energy and/or providing a carrier for the second device.

14. The method of claim 13, wherein the PPDU further comprises at least one portion of: a preamble portion, a header, or a data portion.

15. The method of claim 14, wherein the preamble portion comprises at least one of: a compatible physical preamble, or a first preamble.

16. The method of claim 15, wherein the first preamble is used for the second device to determine the first portion.

17. The method of claim 15 or 16, wherein the compatible physical preamble comprises at least one of:
a short training field (STF), a long training field (LTF), or an LTF1.

18. The method of any one of claims 14 to 17, wherein the header comprises at least one of:
a compatible physical header, a medium access control (MAC) header, or a first header.

19. The method of claim 18, wherein the first header is used to carry relevant information of the first portion.

20. The method of claim 19, wherein the relevant information of the first portion comprises at least one of:
time domain information of the first portion, frequency domain information of the first portion, a modulation mode for backscattering via the first portion, a data rate for backscattering via the first portion, a coding mode for backscattering via the first portion, or a cyclic redundancy check bit corresponding to the first portion.

21. The method of any one of claims 18 to 20, wherein the compatible physical header comprises a signal (SIG) field.

22. The method of any one of claims 14 to 21, wherein the data portion comprises data sent to the second device.

23. The method of any one of claims 13 to 22, wherein the first portion comprises at least one of: a compatible physical preamble, a compatible physical header, a MAC header, or a data portion.

24. The method of any one of claims 13 to 23, wherein the second device comprises at least one of: an Ambient Internet of Things (A-IoT) device, a zero-power device, an ultra low power device, a low power device, or a passive Internet of Things (IoT) device.

25. An apparatus for communication, comprising:
a sending module, configured to send a physical layer protocol data unit (PPDU), the PPDU comprising a first portion for supplying energy and/or providing a carrier for a second device.

26. An apparatus for communication, comprising:
a receiving module, configured to receive a physical layer protocol data unit (PPDU), the PPDU comprising a first portion for supplying energy and/or providing a carrier for the apparatus.

27. A communication device, comprising: a processor, a transceiver coupled to the processor, and a memory for storing executable instructions of the processor,
wherein the processor is configured to load and execute the executable instructions to implement the method for communication of any one of claims 1 to 12.

28. A communication device, comprising: a receiver, wherein the communication device is configured to perform the method for communication of any one of claims 13 to 24.

29. A computer-readable storage medium having stored thereon at least one program that, when loaded and executed by a processor, implements the method for communication of any one of claims 1 to 12, or the method for communication of any one of claims 13 to 24.

30. A computer program product or a computer program comprising computer instructions stored in a computer-readable storage medium from which a processor retrieves the computer instructions and executes the computer instructions to implement the method for communication of any one of claims 1 to 12, or the method for communication of any one of claims 13 to 24.

31. A chip, comprising: a programmable logic circuit and/or at least one program, wherein the chip is configured to, based on the programmable logic circuit and/or the at least one program, implement the method for communication of any one of claims 1 to 12, or the method for communication of any one of claims 13 to 24.
